(19) Europäisches Patentamt
European Patent Office
Office européen des brevets

(11) **EP 3 677 445 A1**

(12) **EUROPEAN PATENT APPLICATION**
published in accordance with Art. 153(4) EPC


(43) Date of publication:
**08.07.2020 Bulletin 2020/28**

(21) Application number: **18863889.4**

(22) Date of filing: **09.10.2018**

(51) Int Cl.:
***B60C 15/06*** *(2006.01)* ***B60C 15/04*** *(2006.01)*

(86) International application number:
**PCT/JP2018/037613**

(87) International publication number:
**WO 2019/070085 (11.04.2019 Gazette 2019/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.10.2017 JP 2017196362**



(71) Applicant: **Bridgestone Corporation**
**Tokyo 104-8340 (JP)**

(72) Inventors:
- **FUDEMOTO, Hiroyuki**
**Tokyo 104-8340 (JP)**
- **YAMADA, Takumi**
**Tokyo 104-8340 (JP)**
- **NAKAKITA, Yukinori**
**Tokyo 104-8340 (JP)**
- **SUZUKI, Takahiro**
**Tokyo 104-8340 (JP)**

(74) Representative: **Oxley, Robin John George**
**Marks & Clerk LLP**
**15 Fetter Lane**
**London EC4A 1BW (GB)**


(54) **TIRE BEAD MEMBER, TIRE, AND METHOD FOR PRODUCING TIRE BEAD MEMBER**


(57) A bead member for a tire, including: a bead wire; a first bead filler (101) that is in contact with the bead wire directly or via another layer and is arranged in a region including at least a region at an outer side of the bead wire in a tire radial direction; and a second bead filler (102) that is in contact with the first bead filler (101) directly or via another layer and is arranged in a region including at least a region at an outer side of the first bead filler (101) in the tire radial direction, the first bead filler (101) including a resin A, the second bead filler (102) including a resin B, and the resin A having a melting point higher than that of the resin B.


FIG.1

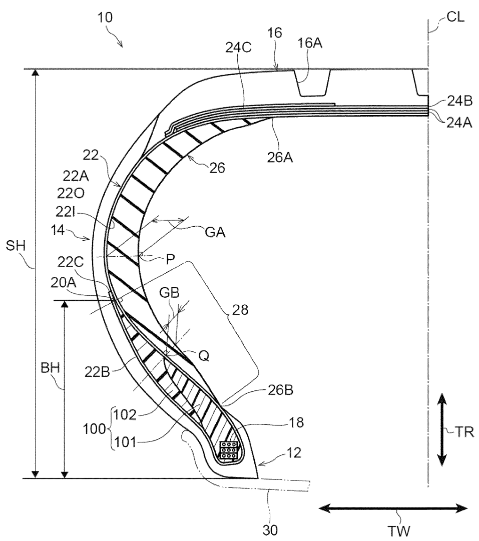


EP 3 677 445 A1

## Description

### TECHNICAL FIELD

The present disclosure relates to: a bead member for a tire; a tire; and a method of producing the bead member for a tire.

### BACKGROUND ART

Conventionally, pneumatic tires including a pair of bead portions, a pair of tire side portions extending from the respective bead portions to the tire radial-direction outer side, and a tread portion extending from one tire side portion to the other tire side portion have been used. In the bead portions of such pneumatic tires, from the standpoint of improving the fixation performance on a rim, a structure in which a bead core having a bead wire is embedded and a bead filler formed from an elastic material is provided around the bead core is adopted.

For example, Patent Document 1 discloses a tire including: a lower bead filler formed using a hard rubber at the outer circumferential side of a bead core; and an upper bead filler which is arranged at the tire radial-direction outer side of the lower bead filler and whose rubber hardness is lower than that of the lower bead filler. In the tire disclosed in Patent Document 1, at a meridional cross-section of the tire, the height (H) of the whole bead filler in the tire radial direction from the outer circumferential surface of the bead core to the upper end of the upper bead filler, the height (h) in the tire radial direction from the outer circumferential surface of the bead core to the upper end of the lower bead filler, and the overlapping length (a) of a lower-end region of the upper bead filler and an upper-end region of the lower bead filler in the tire radial direction are all adjusted to be in specific ranges.

Further, attempts have been made to use a wire covered with a resin-based covering section as a bead wire used in a bead portion.

For example, Patent Document 2 discloses a bead wire for tire skin which includes a wire assembly covered with a covering section produced from a material having a secant modulus at elongation of at least equal to 70 MPa as measured at 10% elongation under room temperature.

[Patent Document 1] Japanese Patent Application Laid-Open (JP-A) No. H5-131815
[Patent Document 2] JP-A No. S63-25110

### SUMMARY OF INVENTION

#### Technical Problem

The tire of Patent Document 1 is described to include upper and lower bead fillers that are formed from rubbers and are different in rubber hardness. However, Patent Document 1 offers no description with regard to incorporating a resin in these bead fillers, and does not focus on improvement of the air sealing performance of resin-containing bead fillers.

Moreover, with regard to the bead wire for tire skin according to Patent Document 2, a wire assembly covered with a covering section made of a material such as a resin that has both elongation and secant modulus at elongation in specific ranges is described; however, no suggestion is made regarding the material in the vicinity of a covering section.

In view of the above-described circumstances, an object of the disclosure is to provide: a bead member for a tire that exhibits excellent run-flat runnability and excellent air sealing performance; a method of producing the same; and a tire including the bead member for a tire.

#### Solution to Problem

The above-described problem is solved by the following disclosure.

<1> A bead member for a tire, comprising:

a bead wire;
a first bead filler that is in contact with the bead wire directly or via another layer and is arranged in a region including at least a region at an outer side of the bead wire in a tire radial direction; and
a second bead filler that is in contact with the first bead filler directly or via another layer and is arranged in a region including at least a region at an outer side of the first bead filler in the tire radial direction,

the first bead filler comprising a resin A,
the second bead filler comprising a resin B, and
the resin A having a melting point higher than that of the resin B.

Effect of Invention

According to the disclosure, a bead member for a tire that exhibits excellent run-flat runnability and excellent air sealing performance; a method of producing the same; and a tire including the bead member for a tire can be provided.

BRIEF DESCRIPTION OF DRAWINGS

FIG. 1 is a tire half cross-sectional view illustrating one side of a cross-section obtained by cutting a tire according to a first embodiment of the disclosure along the width direction of the tire;
FIG. 2 is an enlarged tire widthwise cross-sectional view illustrating the vicinity of a bead portion of the tire illustrated in FIG. 1;
FIG. 3A is a schematic drawing of a cross-section perpendicular to the lengthwise direction of bead wires, which illustrates one embodiment of a bead core according to the disclosure;
FIG. 3B is a schematic drawing of a cross-section perpendicular to the lengthwise direction of bead wires, which illustrates another embodiment of the bead core according to the disclosure;
FIG. 3C is a schematic drawing of a cross-section perpendicular to the lengthwise direction of bead wires, which illustrates yet another embodiment of the bead core according to the disclosure;
FIG. 4 is an enlarged tire widthwise cross-sectional view illustrating the vicinity of a bead portion of a tire according to a second embodiment;
FIG. 5 is an enlarged tire widthwise cross-sectional view illustrating the vicinity of a bead portion of a tire according to a third embodiment; and
FIG. 6 is an enlarged tire widthwise cross-sectional view illustrating the vicinity of a bead portion of a tire according to a fourth embodiment.

DESCRIPTION OF EMBODIMENTS

Specific embodiments of the disclosure are described below in detail; however, the disclosure is not restricted to the below-described embodiments by any means, and the disclosure can be carried out with modifications as appropriate within the intended scope of the disclosure.
The term "resin" used herein is a concept that encompasses thermoplastic resins, thermoplastic elastomers and thermosetting resins, but not vulcanized rubbers. Further, in the descriptions of resins below, the term "same kind" means that the resins of interest have a common skeleton as the skeleton configuring the main chain of each resin as in, for example, ester-based resins or styrene-based resins.
In the present specification, those numerical ranges that are stated with "to" each denote a range that includes the numerical values stated before and after "to" as the lower limit value and the upper limit value, respectively.
The term "step" used herein encompasses not only discrete steps but also steps that cannot be clearly distinguished from other steps, as long as the intended purpose of the step is achieved.
Further, the term "thermoplastic resin" used herein refers to a polymer compound that is softened and fluidized as the temperature is increased and becomes relatively hard and strong when cooled, which polymer compound, however, does not exhibit rubber-like elasticity.
The term "thermoplastic elastomer" used herein refers to a copolymer that has a hard segment and a soft segment. Specific examples of a thermoplastic elastomer include copolymers that include a polymer configuring a crystalline high-melting-point hard segment or a hard segment having a high cohesive strength, and a polymer configuring an amorphous low-glass-transition-temperature soft segment. Examples of a thermoplastic elastomer also include polymer compounds that not only are softened and fluidized as the temperature is increased and become relatively hard and strong when cooled but also exhibit rubber-like elasticity.
The term "hard segment" used herein refers to a component that is relatively harder than a soft segment, and the term "soft segment" used herein refers to a component that is relatively softer than a hard segment. The hard segment is preferably a molecule-restraining component that functions as a crosslinking point of a cross-linked rubber to inhibit plastic deformation. Examples of the hard segment include segments having a structure that contains a rigid group such as an aromatic group or an alicyclic group in the main skeleton, or a structure that allows intermolecular packing through intermolecular hydrogen bonding or $\pi$-$\pi$ interaction. Meanwhile, the soft segment is preferably a flexible component that

exhibits rubber elasticity. Examples of the soft segment include segments having a structure that contains a long-chain group (e.g., a long-chain alkylene group) in the main chain and has a high degree of freedom in molecular rotation and exhibits stretchability.

<Bead Member for Tire>

The bead member for a tire of the disclosure (hereinafter, also simply referred to as "bead member") includes: a bead wire; a first bead filler that is in contact with the bead wire directly or via another layer and is arranged in a region including at least a region at the outer side of the bead wire in the tire radial direction; and a second bead filler that is in contact with the first bead filler directly or via another layer and is arranged in a region including at least a region at the outer side of the first bead filler in the tire radial direction.

The first bead filler contains a resin A, the second bead filler contains a resin B, and the resin A has a melting point higher than that of the resin B.

Hereinafter, the resin A may be referred to as "high-melting-point resin A", and the resin B may be referred to as "low-melting-point resin B". Further, the first bead filler and the second bead filler may each be simply referred to as "bead filler" when they are not distinguished from one another and described collectively.

A configuration in which the first bead filler is "arranged in a region including at least a region at the outer side of the bead wire in the tire radial direction" may be any configuration as long as, taking the tire-radial-direction outermost position of the region where the bead wire is embedded as a reference position, the first bead filler is formed at least in a region at the radial-direction outer side of the reference position. It is noted here that the first bead filler may further be formed in a region at the radial-direction inner side of the reference position, and the first bead filler may further be formed in a region that overlaps with a position at which the bead wire is embedded (e.g., in such a manner to enclose the periphery of the bead wire).

Specific examples of such a configuration include a mode in which the first bead filler not only is in direct contact with the bead wire and covers the entire surface of the bead wire but also is formed in such a manner to extend toward the radial-direction outer side of the bead wire with respect to the position in the tire radial direction at which the bead wire is embedded. When the bead wire is covered with a covering resin layer, the configuration may take, for example, a mode in which the first bead filler not only is in direct contact with the covering resin layer and covers the entire surface of the covering resin layer but also is formed in such a manner to extend toward the radial-direction outer side of the bead wire with respect to the position in the tire radial direction at which the bead wire is embedded. Further, the configuration may also take, for example, a mode in which the first bead filler is in direct contact with the surface of the covering resin layer only at the tire radial-direction outer side and is formed in such a manner to extend toward the radial-direction outer side of the bead wire with respect to the position in the tire radial direction at which the bead wire is embedded.

A configuration in which the second bead filler is "arranged in a region including at least a region at the outer side of the first bead filler in the tire radial direction" may be any configuration as long as, taking the tire-radial-direction outermost position of the region where the first bead filler is arranged as a reference position, the second bead filler is formed at least in a region at the radial-direction outer side of the reference position. In the tire radial direction, the second bead filler may include a region that overlaps with the region where the first bead filler is arranged.

Specific examples of such a configuration include a mode in which there is no overlap in the tire radial direction between the region where the first bead filler is arranged and the region where the second bead filler is arranged (i.e., the second bead filler is in contact only with the tire-radial-direction outermost surface of the region where the first bead filler is arranged), and the second bead filler is formed in such a manner to extend from the contact surface toward the tire radial-direction outer side. The configuration may also take, for example, a mode in which there is an overlap in the tire radial direction between the region where the first bead filler is arranged and the region where the second bead filler is arranged, and the second bead filler not only is in contact with the surface of the first bead filler on at least either the tire width-direction inner side or outer side but also is formed in such a manner to further extend toward the tire radial-direction outer side.

When there is an overlap in the tire radial direction between the region where the first bead filler is arranged and the region where the second bead filler is arranged, it is preferred that the closer to the tire radial-direction inner side (i.e., bead wire side), the larger is the volume occupied by the first bead filler than the volume occupied by the second bead filler. In addition, it is preferred that the closer to the tire radial-direction inner side (i.e., bead wire side), the greater is the amount of the high-melting-point resin A than the amount of the low-melting-point resin B. On the other hand, it is preferred that the closer to the tire radial-direction outer side (i.e., opposite side to the bead wire), the larger is the volume occupied by the second bead filler than the volume occupied by the first bead filler. In addition, it is preferred that the closer to the tire radial-direction outer side (i.e., opposite side to the bead wire), the greater is the amount of the low-melting-point resin B than the amount of the high-melting-point resin A.

The bead member of the disclosure is a member that is used in a pair of bead portions of a tire, and configures

a part or the entirety of the respective bead portions. Specifically, the bead member of the disclosure configures at least a bead wire, a first bead filler, and a second bead filler.

Embodiments of the bead member of the disclosure will now be briefly described referring to the drawings. It is noted here that the sizes of members in each drawing are conceptual, and the relative size relationships among the members are not restricted to those illustrated in the drawings. Further, members having substantially the same function are assigned with the same symbols in all of the drawings, and redundant descriptions thereof may be omitted.

A tire 10 illustrated in FIG. 1 (FIG. 1 illustrates one embodiment, taking a run-flat tire as an example) includes a pair of right and left bead portions 12 (FIG. 1 illustrates only the bead portion 12 of one side). The tire 10 further includes a pair of tire side portions 14 each extending from the pair of the bead portions 12 to the tire radial-direction outer side, and a tread portion 16 extending from one tire side portion 14 to the other tire side portion 14.

Bead cores 18 are embedded in the respective bead portions 12, and a carcass 22 extends between the pair of the right and left bead cores 18.

Further, in each of the bead portions 12, a bead filler 100, which extends from the bead core 18 to the tire radial-direction outer side along an outer surface 22O of the carcass 22 and consists of only a first bead filler 101 and a second bead filler 102, is embedded. The bead filler 100 is arranged, for example, in a region enclosed by a carcass main body 22A and a folded section 22B.

As illustrated in FIG. 2, each bead core 18 includes plural bead wires 1 which are arranged in an array, and a covering resin layer 3 which covers the bead wires 1. It is noted here, however, that the covering resin layer 3 does not have to be arranged, depending on the specifications of the bead member of the disclosure.

In the tire 10 illustrated in FIG. 1 which is a run-flat tire, a side reinforcing rubber 26, which reinforces each tire side portion 14 and is one example of a side reinforcing layer, is arranged at the tire width-direction inner side of the carcass 22 in the respective tire side portions 14.

As described above, in the tire 10 illustrated in FIGs. 1 and 2, the bead member of the disclosure configures the entirety or a part of the pair of the bead portions 12. For example, in the case of FIGs. 1 and 2, at least each bead core including the bead wires, the entirety or a part of each first bead filler, and the entirety or a part of each second bead filler are configured by the bead member of the disclosure.

Conventionally, attempts have been made to use, as bead portions that play a role in the fixation of a tire onto a rim, bead members including a bead core, a lower bead filler, and an upper bead filler arranged at the tire radial-direction outer side of the lower bead filler (e.g., Patent Document 1). Conventionally, rubber materials are generally used for such two kinds of upper and lower bead fillers. However, from the standpoint of the ease of molding, it is demanded to use a resin material for the bead fillers in the bead portions.

According to the studies conducted by the present inventors, it was found that, by arranging the first and the second bead fillers containing the resins A and B of different melting points, respectively, in the bead member of the disclosure in the above-described manner, a tire that exhibits excellent run-flat runnability and excellent air sealing performance is obtained. The reason for this is not clear; however, it is presumed as follows.

In a tire, for example, long hours of running may cause the bead portions to have heat. However, in the bead member of the disclosure, the first bead filler is arranged in a region at the tire radial-direction outer side of the bead wire such that the first bead filler is in contact with the bead wire directly or via another layer, and this first bead filler contains the high-melting-point resin A. Accordingly, for example, if the resin A that covers the bead wire is likely to soften, at the time of starting and stopping of a car, the bead wire moves, so that wheelspin is likely to occur, and heat generation occurs. Even when the bead member has heat, the first bead filler containing the resin A, which is unlikely to be softened by the heat, is likely to retain an appropriate hardness, and this makes the pressing force against a rim more likely to be maintained. As a result, it is believed that air leakage associated with decrease in the pressing force against a rim is inhibited, so that air sealing performance is improved.

In addition, considering the production suitability, by inserting a second bead filler in a mold in advance and then injecting the resin A to form a first bead filler, thereby utilizing the melting heat to weld the bead fillers together, melting adhesion can be easily conducted and sufficient adhesion strength can be obtained.

Further, in the bead member of the disclosure, the second bead filler is arranged in a region at the tire radial-direction outer side of the first bead filler such that the second bead filler is in contact with the first bead filler directly or via another layer, and this second bead filler contains the low-melting-point resin B. Accordingly, even when the bead portion has heat, the second bead filler containing the resin B ensures an appropriate flexibility required in the bead portions, i.e., assumes a function of conforming to the deformation of the bead portions that is caused by a load applied thereto during running. This makes deformation more likely to be inhibited at those spots where deformation caused by a load and displacement associated with such deformation are not desirable, such as the points of contact with a rim. In other words, it is also believed that the occurrence of displacement at a point of contact with a rim caused by deformation of the bead portions is inhibited, and air leakage associated with such displacement is thereby inhibited, as a result of which air sealing performance is improved.

Therefore, by applying the bead member of the disclosure to a tire, a tire that exhibits excellent air sealing

performance is realized.

Particularly, run-flat tires are required to have run-flat runnability, namely runnability in a deflated state. During run-flat running, an extremely high load is applied to bead portions, and deformation and displacement associated therewith are thus more likely to occur due to the high load.

However, according to the disclosure, even in a case where the above-described bead member is applied to a run-flat tire, the second bead filler ensures an appropriate flexibility required for the bead portions when the bead portions have heat, and assumes a function of conforming to the deformation of the bead portions that is caused by a load applied thereto during running, and therefore, displacement caused by deformation of the bead portions is inhibited. As a result, running distance can be extended, and excellent run-flat runnability can be obtained.

In the bead member of the disclosure, the first bead filler is in contact with the bead wires directly or via another layer and arranged in a region including at least a region at the outer side of the bead wires in the tire radial direction.

Example of a mode of the contact between the first bead filler and the bead wires include: a mode in which the surfaces of the bead wires are entirely or partially in direct contact with the first bead filler; and a mode in which the surfaces of the bead wires are entirely or partially in contact with the first bead filler via another layer.

Examples of the other layer include an adhesive layer, a covering layer that covers the bead wires (i.e., a covering resin layer), and a covering layer covered with the adhesive layer. Such other layer may be incorporated singly, or in combination of two or more kinds thereof.

Further, in the bead member of the disclosure, the second bead filler is in contact with the first bead filler directly or via another layer and arranged in a region including at least a region at the outer side of the first bead filler in the tire radial direction.

Example of a mode of the contact between the second bead filler and the first bead filler include: a mode in which at least a part of the surface of the second bead filler is in direct contact with the first bead filler; and a mode in which at least a part of the surface of the second bead filler is in contact with the first bead filler via another layer.

From the standpoint of the production suitability, the former mode (i.e., the direct contact mode) is preferable as the contact mode.

Examples of the other layer include an adhesive layer, and an adhesive layer of the first bead filler and the second bead filler. Such other layer may be incorporated singly, or in combination of two or more kinds thereof.

• Melting Point (Resin A and Resin B)

In the bead member of the disclosure, the first bead filler contains the resin A, the second bead filler contains the resin B, and the melting point of the resin A is higher than that of the resin B.

From the standpoint of improving the adhesion, the melting points of the resins A and B and the difference in melting point between these resins are preferably in the following respective ranges.

The melting point of the resin A is preferably from 160°C to 235°C, more preferably from 164°C to 230°C, still more preferably from 164°C to 225°C, and still more preferably from 164°C to 216°C.

With the melting point of the resin A being 160°C or higher, the pressing force against a rim is likely to be maintained even when the bead portions have heat.

With the melting point of the resin A being 225°C or lower, since the difference in melting point between the resin B and the resin A is not excessively large, heat welding can easily be conducted.

The melting point of the resin B is preferably from 150°C to 220°C, more preferably from 155°C to 215°C.

With the melting point of the resin B being 150°C or higher, the resin B is unlikely to be softened during vulcanization.

With the melting point of the resin B being 220°C or lower, displacement at a point of contact with a rim associated with a running load is likely to be inhibited even when the bead portions have heat.

From the standpoint of insert-welding of the resin A with the resin B, the difference between the melting point of the resin A and that of the resin B [i.e., (melting point of resin A) - (melting point of resin B)] is preferably from 1°C to 70°C, more preferably from 1°C to 60°C, still more preferably from 1°C to 50°C. Further, it is preferably 30°C or lower, and particularly preferably from 1°C to 30°C.

The melting point of the resin A and that of the resin B are each a temperature at which an endothermic peak is observed in a curve (so-called DSC curve) obtained by differential scanning calorimetry (DSC). The melting points are measured in accordance with JIS K 7121:2012 using a differential scanning calorimeter (DSC). The measurement can be performed using, for example, "DSC Q100" manufactured by TA Instruments Inc., at a sweeping rate of 10°C/min.

The melting points of the resins A and B contained in the first and the second bead fillers, respectively, can be adjusted based on, for example, the selection of the materials of the resins A and B.

• Types of Resin A and Resin B

In the bead member of the disclosure, the resin A and the resin B that are contained in the first bead filler and the second bead filler, respectively, are preferably resins that have a common skeleton among structural units configuring main chains of the respective resins.

As for the phrase "resins that have a common skeleton among structural units configuring main chains of the respective resins" used herein, for example, as long as the resin A and the resin B both contain "at least one of polyester-based thermoplastic elastomers (TPC) and thermoplastic polyesters", the resin A and the resin B can be said to have a common skeleton (i.e., an ester bond skeleton) among structural units configuring the main chains of the respective resins. In the same manner, the above phrase also encompasses, for example, the following cases where the resin A and the resin B both contain a thermoplastic resin or a thermoplastic elastomer.

- When the resin A and the resin B both contain "at least one of polyamide-based thermoplastic elastomers (TPA) and thermoplastic polyamides", the resin A and the resin B have an amide bond skeleton as the common skeleton among structural units configuring the main chains of the respective resins.
- When the resin A and the resin B both contain "at least one of polystyrene-based thermoplastic elastomers (TPS) and thermoplastic polystyrenes", the resin A and the resin B have a polystyrene skeleton as the common skeleton among structural units configuring the main chains of the respective resins.
- When the resin A and the resin B both contain "at least one of polyurethane-based thermoplastic elastomers (TPU) and thermoplastic polyurethanes", the resin A and the resin B have a urethane bond skeleton as the common skeleton among structural units configuring the main chains of the respective resins.
- When the resin A and the resin B both contain "at least one of polyolefin-based thermoplastic elastomers (TPO) and thermoplastic polyolefins", the resin A and the resin B have a polyolefin skeleton as the common skeleton among structural units configuring the main chains of the respective resins.

As the resin A and the resin B, it is preferred to use thermoplastic resins or thermoplastic elastomers that contain structural units of the same chemical structure as the structural units configuring the molecular structures of the respective resins (e.g., thermoplastic resins or thermoplastic elastomers in which monomers of the same structure are used as the raw material monomers of the respective resins).

It is more preferred to use thermoplastic resins or thermoplastic elastomers that contain only structural units of the same chemical structure as the structural units configuring the molecular structures of the respective resins (e.g., thermoplastic resins or thermoplastic elastomers in which only monomers of the same structure are used as the raw material monomers of the respective resins).

With the resin A contained in the first bead filler and the resin B contained in the second bead filler being resins that have a common skeleton among structural units configuring the main chains of the respective resins, the affinity between the first bead filler and the second bead filler is enhanced, so that their adhesion is improved. As a result, the occurrence of displacement between the first bead filler and the second bead filler at their interface is inhibited, and the effect attributed to the first bead filler (i.e., maintaining of the pressing force against a rim) and the effect attributed to the second bead filler (i.e., improvement in conforming performance) are thus likely to be exerted.

In the bead member of the disclosure, from the standpoint of further improving the air sealing performance, it is preferred that at least either of the resin A and the resin B is a thermoplastic elastomer, or that at least either of the resin A and the resin B is a polyamide-based thermoplastic elastomer or a polyester-based thermoplastic elastomer.

The details of the above-described thermoplastic resins and thermoplastic elastomers are described below.

• Charpy Impact Strength (First Bead Filler and Second Bead Filler)

In the bead member of the disclosure, the first bead filler and the second bead filler both have a Charpy impact strength of preferably 5 $kJ/m^2$ or higher, more preferably 6 $kJ/m^2$ or higher, still more preferably 7 $kJ/m^2$ or higher. An upper limit value of the Charpy impact strength of these bead fillers is not particularly restricted; however, it is preferred that the bead fillers are not broken (NB), and the upper limit value is preferably 20 $kJ/m^2$ or less, more preferably 15 $kJ/m^2$ or less.

By controlling the lower limit value of the Charpy impact strength to be in the above-described range, the occurrence of cracking, which is caused by a load momentarily applied to the first bead filler and the second bead filler at the time of mounting the tire on a rim or during running (particularly, during run-flat running) or the like, is inhibited.

Meanwhile, by controlling the upper limit value of the Charpy impact strength to be in the above-described range, mounting of the tire onto a rim and running can be performed without cracking of the bead fillers, and the effects of using resin-containing beads can be obtained.

The Charpy impact strength of the first bead filler and that of the second bead filler are measured in accordance

with the method prescribed in JIS K7111-1:2012 using a Charpy impact tester (trade name: Model 141, manufactured by Yasuda Seiki Seisakusho, Ltd.) at a test piece (notched) temperature of 23°C.

For example, at a nominal pendulum energy (estimation) of 4 J and a hammer lift angle of 150°, the restored angle of the hammer after colliding with a sample is measured, and the amount of consumed energy (i.e., the amount of absorbed energy) is calculated from the difference in the angle before and after the collision.

The Charpy impact strength of the first bead filler and that of the second bead filler are adjusted based on, for example, the selection of the materials configuring the first bead filler and the second bead filler. Particularly, the Charpy impact strength can be adjusted based on the selection of the materials of the resins A and B that are contained in the first and the second bead fillers, respectively.

• Tensile Elastic Modulus (First Bead Filler and Second Bead Filler)

In the bead member of the disclosure, the tensile elastic modulus of the first bead filler is preferably higher than that of the second bead filler.

By allowing the first bead filler to have a high tensile elastic modulus, the first bead filler maintains an appropriate hardness, so that the pressing force against a rim is likely to be maintained. It is believed that, as a result, air leakage associated with decrease in the pressing force against a rim is inhibited, whereby the air sealing performance is improved. Further, by allowing the second bead filler to have a low tensile elastic modulus, the second bead filler ensures an appropriate flexibility required for the bead portions, i.e., assumes a function of conforming to the deformation of the bead portions that is caused by a load applied thereto during running. It is also believed that, by this, displacement at a point of contact with a rim, which is caused by a running load, is inhibited, and air leakage associated with such displacement is thereby inhibited, as a result of which the air sealing performance is improved.

Further, since the difference in hardness from an erastic portion in contact with the second bead filler directly or via another layer (for example, a rubber or a resin contained in a tire side portion 14 and a rubber or a resin contained in a side reinforcing layer (e.g., side reinforcing rubber 26), which are in contact with the second bead filler via a carcass 22, in the case of a tire 10 in FIG. 1) is reduced, the difference in rigidity in such portions is likely to be reduced. It is believed that, as a result, the load (associated with a running load) on the portions with the difference in rigidity is reduced, so that the durability is improved.

From the standpoint of further improving the air sealing performance, the tensile elastic modulus of the first bead filler and that of the second bead filler as well as the difference therebetween are preferably in the following respective ranges.

The tensile elastic modulus of the first bead filler is preferably from 260 MPa to 1,400 MPa, more preferably from 260 MPa to 1,200 MPa, still more preferably from 260 MPa to 1,000 MPa.

When the tensile elastic modulus of the first bead filler is 260 MPa or higher, the pressing force against a rim is likely to be maintained, so that the air sealing performance is likely to be improved.

When the tensile elastic modulus of the first bead filler is 1,400 MPa or lower, the first bead filler is unlikely to be cracked and is likely to hold the bead core.

The tensile elastic modulus of the second bead filler is preferably from 137 MPa to 1,000 MPa, more preferably from 137 MPa to 950 MPa, still more preferably from 150 MPa to 900 MPa.

When the tensile elastic modulus of the second bead filler is 137 MPa or higher, the second bead filler is likely to support a load.

When the tensile elastic modulus of the second bead filler is 1,000 MPa or lower, displacement at a point of contact with a rim associated with a running load is likely to be inhibited, particularly the second bead filler is unlikely to be cracked during run-flat running, and the second bead filler is likely to support a load.

From the standpoints of maintaining an appropriate hardness and maintaining an appropriate flexibility in the bead portions, the difference between the above-described tensile elastic modulus values [i.e., (tensile elastic modulus of first bead filler) - (tensile elastic modulus of second bead filler)] is preferably from 50 MPa to 1,000 MPa, more preferably from 70 MPa to 900 MPa, still more preferably from 100 MPa to 800 MPa.

The tensile elastic modulus is measured in accordance with JIS K7113:1995. Specifically, the tensile elastic modulus is measured using SHIMADZU AUTOGRAPH AGS-J (5 kN) manufactured by Shimadzu Corporation at a tensile rate of 100 mm/min. For the measurement of the tensile elastic modulus of the first bead filler or the second bead filler in the bead member, for example, a measurement sample made of the same material as the first bead filler or the second bead filler may be separately prepared to measure the elastic modulus.

The tensile elastic modulus of the first bead filler and that of the second bead filler can be adjusted based on, for example, the selection of the materials configuring the first bead filler and the second bead filler, particularly the selection of the materials of the resins A and B.

• Water Absorption Rate (First Bead Filler and Second Bead Filler)

In the disclosure, the first bead filler and the second bead filler both have a water absorption rate of preferably not higher than 3.5% by mass. The water absorption rate of the first bead filler and that of the second bead filler are both preferably not higher than 3.0% by mass, more preferably not higher than 2.5% by mass, and they are preferably as close to 0% by mass as possible.

By controlling the water absorption rates to be in the above-described range, a change in the hardness of the first bead filler and that of the second bead filler caused by water absorption is inhibited, so that air leakage (i.e., deterioration of the air sealing performance) associated with a change in the hardness is likely to be inhibited as well.

The water absorption rate of the first bead filler and that of the second bead filler each represent a water absorption rate measured in accordance with ISO62 (1999).

The above-described water absorption rates can be adjusted based on, for example, the selection of the materials configuring the first bead filler and the second bead filler, particularly the selection of the materials of the resins A and B that are contained in the first and the second bead fillers, respectively.

Next, the constituents of the bead member will be described in detail.

<Configuration of Bead Member>

The bead member of the disclosure includes, at least: a bead wire; a first bead filler; and a second bead filler, and the shape of the bead member is not particularly restricted.

In the bead member of the disclosure, the bead wire may be covered with a covering layer, and an adhesive layer may be arranged between the bead wire and the covering layer.

The details of the covering layer and the adhesive layer are described below.

[Bead Wire]

The bead wire is not particularly restricted and, for example, a cord made of a metal or an organic resin that is used in conventional tires can be used as appropriate. The bead wire consists of only, for example, a monofilament (i.e., a single wire) composed of metal fibers, organic fibers or the like, or a multifilament (i.e., a twisted wire) obtained by twisting these fibers. Particularly, a cord made of a metal (more preferably a cord made of iron (i.e., a steel cord)) is preferred.

In the disclosure, from the standpoint of further improving the tire durability, the bead wire is preferably a monofilament (i.e., a single wire). The cross-sectional shape, the size (e.g., diameter) and the like of the bead wire are not particularly restricted, and a bead wire suitable for the desired tire can be selected as appropriate.

When the bead wire is a twisted wire composed of plural cords, the number of the plural cords is, for example, from 2 to 10, and it is preferably from 5 to 9.

From the standpoint of satisfying both internal pressure resistance and weight reduction of the tire, the thickness of the bead wire is preferably from 0.3 mm to 3 mm, more preferably from 0.5 mm to 2 mm. The thickness of the bead wire is defined as a number-average of the thickness values measured at five cross-sections (i.e., cross-sections perpendicular to the lengthwise direction of the bead wire) that are arbitrarily selected.

The strength of the bead wire itself is usually from 1,000 N to 3,000 N, preferably from 1,200 N to 2,800 N, more preferably from 1,300 N to 2,700 N. The strength of the bead wire is calculated from the breaking point based on a stress-strain curve drawn using a tensile tester equipped with a ZWICK-type chuck.

The elongation at break (i.e., tensile elongation at break) of the bead wire itself is usually from 0.1% to 15%, preferably from 1% to 15%, more preferably from 1% to 10%. The tensile elongation at break of the bead wire can be determined from the strain based on a stress-strain curve drawn using a tensile tester equipped with a ZWICK-type chuck.

[First Bead Filler]

The first bead filler contains the resin A. It is noted here that the melting point of the resin A is higher than that of the resin B contained in the second bead filler.

As the resin A contained in the first bead filler, as described above, it is preferred to select a resin that has a skeleton, which is in common with the resin B contained in the second bead filler, among structural units configuring the main chain of the resin.

Examples of the resin A contained in the first bead filler include thermoplastic resins, thermoplastic elastomers, and thermosetting resins.

From the standpoint of the ease of molding, the first bead filler contains, as the resin A, preferably a thermoplastic resin or a thermoplastic elastomer, more preferably a thermoplastic elastomer. Among thermoplastic elastomers, the

first bead filler particularly preferably contains a polyamide-based thermoplastic elastomer or a polyester-based thermoplastic elastomer.

The first bead filler is satisfactory as long as it contains at least the resin A, and the first bead filler may also contain other resin (e.g., a thermoplastic resin or a thermoplastic elastomer) within a range that does not impair the effects of the disclosure (i.e., the first bead filler may be a mixture of the resin A and other resin). The first bead filler may further contain other component(s) such as additives. It is noted here, however, that the content of the resin A in the first bead filler is preferably not less than 50% by mass, more preferably not less than 60% by mass, still more preferably not less than 75% by mass, with respect to a total amount of the first bead filler.

Examples of the thermoplastic elastomer include polyamide-based thermoplastic elastomers (TPA), polyester-based thermoplastic elastomers (TPEE), polystyrene-based thermoplastic elastomers (TPS), polyurethane-based thermoplastic elastomers (TPU), olefin-based thermoplastic elastomers (TPO), thermoplastic rubber vulcanizates (TPV), and other thermoplastic elastomers (TPZ), all of which are defined in JIS K6418.

Examples of the thermoplastic resin include polyamide-based thermoplastic resins, polyester-based thermoplastic resins, olefin-based thermoplastic resins, polyurethane-based thermoplastic resins, vinyl chloride-based thermoplastic resins, and polystyrene-based thermoplastic resins. In the covering resin layer, these resins may be used singly, or in combination of two or more kinds thereof. Among these thermoplastic resins, at least one selected from polyamide-based thermoplastic resins, polyester-based thermoplastic resins and olefin-based thermoplastic resins is preferred, and at least one selected from polyamide-based thermoplastic resins and polyester-based thermoplastic resins is more preferred.

The above-described thermoplastic elastomers and thermoplastic resins will now be described.

(Thermoplastic Elastomers)

-Polyamide-Based Thermoplastic Elastomers-

The term "polyamide-based thermoplastic elastomer" used herein means a thermoplastic resin material consisting of only a copolymer that includes a polymer configuring a crystalline high-melting-point hard segment and a polymer configuring an amorphous low-glass-transition-temperature soft segment, wherein the polymer configuring the hard segment has an amide bond (-CONH-) in its main chain.

Examples of a polyamide-based thermoplastic elastomer include materials in which at least a polyamide configures a crystalline high-melting-point hard segment and other polymer (e.g., a polyester or a polyether) configures an amorphous low-glass-transition-temperature soft segment.

A polyamide-based thermoplastic elastomer may be formed using a chain extender such as a dicarboxylic acid, in addition to the hard segment and the soft segment.

Specific examples of the polyamide-based thermoplastic elastomer include the amide-based thermoplastic elastomers (TPA) defined in JIS K6418:2007 and the polyamide-based elastomers described in JP-A No. 2004-346273.

In the polyamide-based thermoplastic elastomer, the polyamide configuring the hard segment may be, for example, a polyamide formed from a monomer represented by the following Formula (1) or (2).

$H_2N\text{-}R^1\text{-}COOH$ Formula (1)

[wherein, $R^1$ represents a hydrocarbon molecular chain having from 2 to 20 carbon atoms (e.g., an alkylene group having from 2 to 20 carbon atoms)]

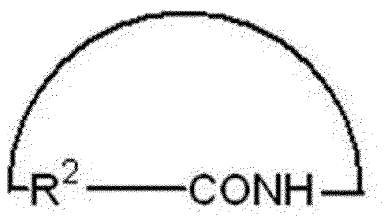

Formula (2)

[wherein, $R^2$ represents a hydrocarbon molecular chain having from 3 to 20 carbon atoms (e.g., an alkylene group having from 3 to 20 carbon atoms)]

In Formula (1), $R^1$ is preferably a hydrocarbon molecular chain having from 3 to 18 carbon atoms (e.g., an alkylene group having from 3 to 18 carbon atoms), more preferably a hydrocarbon molecular chain having from 4 to 15 carbon atoms (e.g., an alkylene group having from 4 to 15 carbon atoms), particularly preferably a hydrocarbon molecular chain having from 10 to 15 carbon atom (e.g., an alkylene group having from 10 to 15 carbon atoms).

Further, in Formula (2), $R^2$ is preferably a hydrocarbon molecular chain having from 3 to 18 carbon atoms (e.g., an alkylene group having from 3 to 18 carbon atoms), more preferably a hydrocarbon molecular chain having from 4 to 15 carbon atom (e.g., an alkylene group having from 4 to 15 carbon atoms), particularly preferably a hydrocarbon molecular chain having from 10 to 15 carbon atoms (e.g., an alkylene group having from 10 to 15 carbon atoms).

Examples of the monomer represented by Formula (1) or (2) include $\omega$-aminocarboxylic acids and lactams. Examples of the polyamide configuring the hard segment include polycondensates of an $\omega$-aminocarboxylic acid or a lactam, and co-polycondensates of a diamine and a dicarboxylic acid.

Examples of the $\omega$-aminocarboxylic acids include aliphatic $\omega$-aminocarboxylic acids having from 5 to 20 carbon atoms, such as 6-aminocaproic acid, 7-aminoheptanoic acid, 8-aminooctanoic acid, 10-aminocapric acid, 11-aminoundecanoic acid, and 12-aminododecanoic acid. Examples of the lactams include aliphatic lactams having from 5 to 20 carbon atoms, such as lauryl lactam, $\varepsilon$-caprolactam, undecane lactam, $\omega$-enantholactam, and 2-pyrrolidone.

Examples of the diamine include diamine compounds, for example, aliphatic diamines having from 2 to 20 carbon atoms, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and *m*-xylene diamine.

The dicarboxylic acid may be represented by $HOOC-(R^3)_m-COOH$ ($R^3$: a hydrocarbon molecular chain having from 3 to 20 carbon atoms, m: 0 or 1), and examples thereof include aliphatic dicarboxylic acids having from 2 to 20 carbon atoms, such as oxalic acid, succinic acid, glutaric acid, adipic acid, pimelic acid, suberic acid, azelaic acid, sebacic acid, and dodecanedioic acid.

As the polyamide configuring the hard segment, a polyamide obtained by ring-opening polycondensation of lauryl lactam, $\varepsilon$-caprolactam or undecanelactam can be preferably used.

Examples of the polymer configuring the soft segment include polyesters and polyethers, specifically polyethylene glycols, polypropylene glycols, polytetramethylene ether glycols, and ABA-type triblock polyethers. These polymers may be used singly, or in combination of two or more kinds thereof. Further, a polyether diamine obtained by allowing ammonia or the like to react with a terminal of a polyether can be used as well.

The term "ABA-type triblock polyether" used herein means a polyether represented by the following Formula (3).

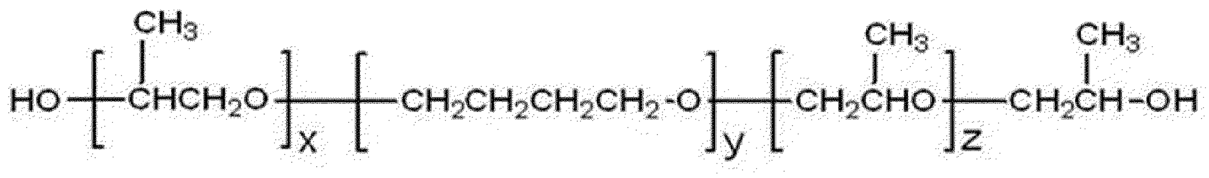

Formula (3)

[wherein, x and z each represent an integer of 1 to 20, and y represents an integer of 4 to 50]

In Formula (3), x and z are each preferably an integer of 1 to 18, more preferably an integer of 1 to 16, still more preferably an integer of 1 to 14, particularly preferably an integer of 1 to 12. Further, in Formula (3), y is preferably an integer of 5 to 45, more preferably an integer of 6 to 40, still more preferably an integer of 7 to 35, particularly preferably an integer of 8 to 30.

Examples of a combination of the hard segment and the soft segment include combinations of any of the above-described hard segments and any of the above-described soft segments. Thereamong, as the combination of the hard segment and the soft segment, a combination of a ring-opened polycondensate of lauryl lactam and a polyethylene glycol, a combination of a ring-opened polycondensate of lauryl lactam and a polypropylene glycol, a combination of a ring-opened polycondensate of lauryl lactam and a polytetramethylene ether glycol, or a combination of a ring-opened polycondensate of lauryl lactam and an ABA-type triblock polyether is preferred, and a combination of a ring-opened polycondensate of lauryl lactam and an ABA-type triblock polyether is more preferred.

From the standpoint of the melt-moldability, the number-average molecular weight of the polymer (i.e., polyamide) configuring the hard segment is preferably from 300 to 15,000. Meanwhile, from the standpoints of the toughness and the low-temperature flexibility, the number-average molecular weight of the polymer configuring the soft segment is preferably from 200 to 6,000. Further, from the standpoint of the moldability, the mass ratio (x:y) of the hard segment (x) and the soft segment (y) is preferably from 50:50 to 90:10, more preferably from 50:50 to 80:20.

The polyamide-based thermoplastic elastomer can be synthesized by copolymerizing the polymer configuring the hard segment and the polymer configuring the soft segment by a known method.

As commercially available products of polyamide-based thermoplastic elastomer, for example, "UBESTA XPA" Series manufactured by UBE Industries, Ltd. (e.g., XPA9063X1, XPA9055X1, XPA9048X2, XPA9048X1, XPA9040X1, XPA9040X2, and XPA9044), and "VESTAMID" Series manufactured by Daicel-Evonik Ltd. (e.g., E40-S3, E47-S1, E47-S3, E55-S1, E55-S3, EX9200, and E50-R2) can be used.

These polyamide-based thermoplastic elastomers are suitable as resin materials since they satisfy the performance required for bead portions in terms of elastic modulus (i.e., flexibility), strength and the like. In addition, polyamide-based thermoplastic elastomers often exhibit favorable adhesion with thermoplastic resins and thermoplastic elastomers.

-Polyester-Based Thermoplastic Elastomers-

The polyester-based thermoplastic elastomers may be, for example, materials in which at least a polyester configures a crystalline high-melting-point hard segment and other polymer (e.g., a polyester or a polyether) configures an amorphous low-glass-transition-temperature soft segment.

As the polyester configuring the hard segment, for example, an aromatic polyester can be used. The aromatic polyester can be formed from, for example, an aromatic dicarboxylic acid or an ester-forming derivative thereof, and an aliphatic diol. The aromatic polyester is preferably a polybutylene terephthalate derived from at least one of terephthalic acid and dimethyl terephthalate, and 1,4-butanediol. The aromatic polyester may be, for example, a polyester derived from a dicarboxylic acid component, such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof, and a diol component, such as a diol having a molecular weight of 300 or less (e.g., an aliphatic diol, such as ethylene glycol, trimethylene glycol, pentamethylene glycol, hexamethylene glycol, neopentyl glycol, or decamethylene glycol; an alicyclic diol, such as 1,4-cyclohexane dimethanol or tricyclodecane dimethylol; or an aromatic diol, such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-*p*-terphenyl, or 4,4'-dihydroxy-*p*-quaterphenyl). Alternatively, the aromatic polyester may be a copolymerized polyester in which two or more kinds of these dicarboxylic acid components and diol components are used in combination. Further, a polyfunctional carboxylic acid component, a polyfunctional oxyacid component, a polyfunctional hydroxy component or the like, which has three or more functional groups, can be copolymerized in a range of 5% by mole or less.

Examples of the polyester configuring the hard segment include polyethylene terephthalates, polybutylene terephthalates, polymethylene terephthalates, polyethylene naphthalates, and polybutylene naphthalates, among which a polybutylene terephthalate is preferred.

The polymer configuring the soft segment may be, for example, an aliphatic polyester or an aliphatic polyether.

Examples of the aliphatic polyether include poly(ethylene oxide) glycols, poly(propylene oxide) glycols, poly(tetramethylene oxide) glycols, poly(hexamethylene oxide) glycols, copolymers of ethylene oxide and propylene oxide, ethylene oxide addition polymers of poly(propylene oxide) glycols, and copolymers of ethylene oxide and tetrahydrofuran.

Examples of the aliphatic polyester include poly($\varepsilon$-caprolactone)s, polyenantholactones, polycaprylolactones, polybutylene adipates, and polyethylene adipates.

Among these aliphatic polyethers and aliphatic polyesters, from the standpoint of the elastic properties of the resulting polyester block copolymer, for example, a poly(tetramethylene oxide) glycol, an ethylene oxide adduct of a poly(propylene oxide) glycol, a poly($\varepsilon$-caprolactone), a polybutylene adipate, or a polyethylene adipate is preferred as the polymer configuring the soft segment.

From the standpoints of the toughness and the low-temperature flexibility, the number-average molecular weight of the polymer configuring the soft segment is preferably from 300 to 6,000. Further, from the standpoint of the moldability, the mass ratio (x:y) of the hard segment (x) and the soft segment (y) is preferably from 99:1 to 20:80, more preferably from 98:2 to 30:70.

Examples of a combination of the hard segment and the soft segment include combinations of any of the above-described hard segments and any of the above-described soft segments. Thereamong, as the combination of the hard segment and the soft segment, a combination in which the hard segment is a polybutylene terephthalate and the soft segment is an aliphatic polyether is preferred, and a combination in which the hard segment is a polybutylene terephthalate and the soft segment is a poly(ethylene oxide) glycol is more preferred.

As commercially available products of polyester-based thermoplastic elastomer, for example, "HYTREL" Series manufactured by DuPont-Toray Co., Ltd. (e.g., 3046, 5557, 6347, 4047N, and 4767N), and "PELPRENE" Series manufactured by TOYOBO Co., Ltd. (e.g., P30B, P40B, P40H, P55B, P70B, P150B, P280B, E450B, P150M, S1001, S2001, S5001, S6001, and S9001) can be used.

A polyester-based thermoplastic elastomer can be synthesized by copolymerizing the polymer configuring the

hard segment and the polymer configuring the soft segment by a known method.

-Polystyrene-Based Thermoplastic Elastomers-

Examples of the polystyrene-based thermoplastic elastomers include materials in which at least a polystyrene configures a hard segment and other polymer (e.g., a polybutadiene, a polyisoprene, a polyethylene, a hydrogenated polybutadiene, or a hydrogenated polyisoprene) configures an amorphous low-glass-transition-temperature soft segment. As the polystyrene configuring the hard segment, for example, one obtained by a known radical polymerization method or ionic polymerization method can be preferably used, and specific examples of such a polystyrene include polystyrenes obtained by anionic living polymerization. Examples of the polymer configuring the soft segment include polybutadienes, polyisoprenes, and poly(2,3-dimethyl-butadiene)s.

Examples of a combination of the hard segment and the soft segment include combinations of any of the above-described hard segments and any of the above-described soft segments. Thereamong, as the combination of the hard segment and the soft segment, a combination of a polystyrene and a polybutadiene, or a combination of a polystyrene and a polyisoprene is preferred. In order to inhibit an unintended crosslinking reaction of the thermoplastic elastomer, the soft segment is preferably hydrogenated.

The number-average molecular weight of the polymer (i.e., polystyrene) configuring the hard segment is preferably from 5,000 to 500,000, more preferably from 10,000 to 200,000.

Meanwhile, the number-average molecular weight of the polymer configuring the soft segment is preferably from 5,000 to 1,000,000, more preferably from 10,000 to 800,000, still more preferably from 30,000 to 500,000. Further, from the standpoint of the moldability, the volume ratio (x:y) of the hard segment (x) and the soft segment (y) is preferably from 5:95 to 80:20, more preferably from 10:90 to 70:30.

A polystyrene-based thermoplastic elastomer can be synthesized by copolymerizing the polymer configuring the hard segment and the polymer configuring the soft segment by a known method.

Examples of the polystyrene-based thermoplastic elastomer include styrene-butadiene-based copolymers [e.g., SBS (polystyrene-poly(butylene) block-polystyrene), SEBS (polystyrene-poly(ethylene/butylene) block-polystyrene)], styrene-isoprene copolymers (e.g., polystyrene-polyisoprene block-polystyrene), styrene-propylene-based copolymers [e.g., SEP (polystyrene-(ethylene/propylene) block), SEPS (polystyrene-poly(ethylene/propylene) block-polystyrene), SEEPS (polystyrene-poly(ethylene-ethylene/propylene) block-polystyrene), and SEB (polystyrene (ethylene/butylene) block)].

As commercially available products of polystyrene-based thermoplastic elastomer, for example, "TUFTEC" Series manufactured by Asahi Kasei Corporation (e.g., H1031, H1041, H1043, H1051, H1052, H1053, H1062, H1082, H1141, H1221, and H1272) as well as "SEBS" Series (e.g., 8007 and 8076) and "SEPS" Series (e.g., 2002 and 2063), which are manufactured by Kuraray Co., Ltd., can be used.

-Polyurethane-Based Thermoplastic Elastomers-

Examples of the polyurethane-based thermoplastic elastomers include materials in which at least a polyurethane configures a hard segment forming pseudo-crosslinks by physical aggregation and other polymer configures an amorphous low-glass-transition-temperature soft segment.

Specific examples of the polyurethane-based thermoplastic elastomers include the polyurethane-based thermoplastic elastomers (TPU) defined in JIS K6418: 2007. The polyurethane-based thermoplastic elastomers can be typified by a copolymer that includes a soft segment containing a unit structure represented by the following Formula A and a hard segment containing a unit structure represented by the following Formula B.

Formula A: 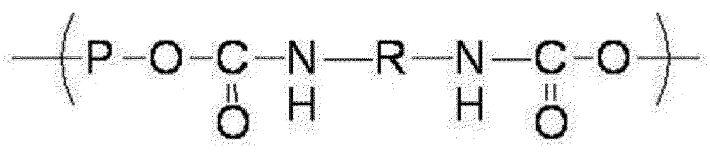

Formula B; 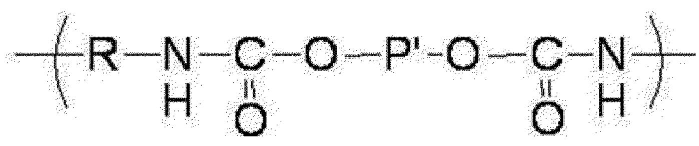

[wherein, P represents a long-chain aliphatic polyether or a long-chain aliphatic polyester; R represents an aliphatic

hydrocarbon, an alicyclic hydrocarbon, or an aromatic hydrocarbon; P' represents a short-chain aliphatic hydrocarbon, an alicyclic hydrocarbon, or an aromatic hydrocarbon]

As the long-chain aliphatic polyether or long-chain aliphatic polyester represented by P in Formula A, for example, one having a molecular weight of from 500 to 5,000 can be used. P is derived from a diol compound containing the long-chain aliphatic polyether or long-chain aliphatic polyester represented by P. Examples of such a diol compound include polyethylene glycols, polypropylene glycols, polytetramethylene ether glycols, poly(butylene adipate) diols, poly-$\varepsilon$-caprolactone diols, poly(hexamethylene carbonate) diols and ABA-type triblock polyethers, which have a molecular weight in the above-described range.

These diol compounds may be used singly, or in combination of two or more kinds thereof.

In Formulae A and B, R is a partial structure which is introduced using a diisocyanate compound containing the aliphatic hydrocarbon, alicyclic hydrocarbon or aromatic hydrocarbon that is represented by R. Examples of an aliphatic diisocyanate compound containing the aliphatic hydrocarbon represented by R include 1,2-ethylene diisocyanate, 1,3-propylene diisocyanate, 1,4-butane diisocyanate, and 1,6-hexamethylene diisocyanate.

Examples of the diisocyanate compound containing the alicyclic hydrocarbon represented by R include 1,4-cyclohexane diisocyanate and 4,4-cyclohexane diisocyanate. Further, examples of an aromatic diisocyanate compound containing the aromatic hydrocarbon represented by R include 4,4'-diphenylmethane diisocyanate and tolylene diisocyanate.

These diisocyanate compounds may be used singly, or in combination of two or more kinds thereof.

As the short-chain aliphatic hydrocarbon, alicyclic hydrocarbon or aromatic hydrocarbon that is represented by P' in Formula B, for example, one having a molecular weight of less than 500 can be used. P' is derived from a diol compound containing the short-chain aliphatic hydrocarbon, alicyclic hydrocarbon or aromatic hydrocarbon that is represented by P'. Examples of an aliphatic diol compound containing the short-chain aliphatic hydrocarbon represented by P' include glycol and polyalkylene glycols, specifically ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, and 1,10-decanediol.

Examples of an alicyclic diol compound containing the alicyclic hydrocarbon represented by P' include cyclopentane-1,2-diol, cyclohexane-1,2-diol, cyclohexane-1,3-diol, cyclohexane-1,4-diol, and cyclohexane-1,4-dimethanol.

Further, examples of an aromatic diol compound containing the aromatic hydrocarbon represented by P' include hydroquinone, resorcin, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenyl sulfide, 4,4'-dihydroxydiphenyl sulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene, and 2,6-dihydroxynaphthalene.

These diol compounds may be used singly, or in combination of two or more kinds thereof.

From the standpoint of the melt-moldability, the number-average molecular weight of the polymer (i.e., polyurethane) configuring the hard segment is preferably from 300 to 1,500. Meanwhile, from the standpoints of the flexibility and the thermal stability of the polyurethane-based thermoplastic elastomer, the number-average molecular weight of the polymer configuring the soft segment is preferably from 500 to 20,000, more preferably from 500 to 5,000, particularly preferably from 500 to 3,000. Further, from the standpoint of the moldability, the mass ratio (x:y) of the hard segment (x) and the soft segment (y) is preferably from 15:85 to 90:10, more preferably from 30:70 to 90:10.

A polyurethane-based thermoplastic elastomer can be synthesized by copolymerizing the polymer configuring the hard segment and the polymer configuring the soft segment by a known method. As the polyurethane-based thermoplastic elastomer, a thermoplastic polyurethane described in JP-ANo. H05-331256 can be used.

As the polyurethane-based thermoplastic elastomer, specifically a combination of a hard segment consisting of only an aromatic diol and an aromatic diisocyanate and a soft segment consisting of only a polycarbonate is preferred, and more specifically at least one selected from a tolylene diisocyanate (TDI)/polyester-based polyol copolymer, a TDI/polyether-based polyol copolymer, a TDI/caprolactone-based polyol copolymer, a TDI/polycarbonate-based polyol copolymer, a 4,4'-diphenylmethane diisocyanate (MDI)/polyester-based polyol copolymer, an MDI/polyether-based polyol copolymer, an MDI/caprolactone-based polyol copolymer, an MDI/polycarbonate-based polyol copolymer and an MDI + hydroquinone/polyhexamethylene carbonate copolymer is preferred. Thereamong, at least one selected from a TDI/polyester-based polyol copolymer, a TDI/polyether-based polyol copolymer, an MDI/polyester polyol copolymer, an MDI/polyether-based polyol copolymer and an MDI + hydroquinone/polyhexamethylene carbonate copolymer is more preferred.

As commercially available products of polyurethane-based thermoplastic elastomer, for example, "ELASTOLLAN" Series manufactured by BASF SE (e.g., ET680, ET880, ET690, and ET890), "KURAMILON U" Series manufactured by Kuraray Co., Ltd. (e.g., 2000s, 3000s, 8000s, and 9000s), and "MIRACTRAN" Series manufactured by Nippon Miractran Co., Ltd. (e.g., XN-2001, XN-2004, P390RSUP, P480RSUI, P26MRNAT, E490, E590, and P890) can be used.

-Olefin-Based Thermoplastic Elastomers-

Examples of the olefin-based thermoplastic elastomers include materials in which at least a polyolefin configures a crystalline high-melting-point hard segment and other polymer (e.g., other polyolefin or a polyvinyl compound) configures an amorphous low-glass-transition-temperature soft segment. Examples of the polyolefin configuring the hard segment include polyethylenes, polypropylenes, isotactic polypropylenes, and polybutenes.

Examples of the olefin-based thermoplastic elastomers also include olefin-$\alpha$-olefin random copolymers and olefin block copolymers, specifically a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, a 1-butene-1-hexene copolymer, 1-butene-4-methyl-pentene, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer, and a propylene-vinyl acetate copolymer.

Thereamong, as an olefin-based thermoplastic elastomer, at least one selected from a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, an ethyl ene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer and a propylene-vinyl acetate copolymer is preferred, and at least one selected from an ethylene-propylene copolymer, a propylene-1-butene copolymer, an ethylene-1-butene copolymer, an ethylene-methyl methacrylate copolymer, an ethylene-methyl acrylate copolymer, an ethylene-ethyl acrylate copolymer and an ethylene-butyl acrylate copolymer is more preferred.

Further, a combination of two or more kinds of olefin resins, such as ethylene and propylene, may be used as well. The content ratio of an olefin resin(s) in the olefin-based thermoplastic elastomer is preferably from 50% by mass to 100% by mass.

The number-average molecular weight of the olefin-based thermoplastic elastomer is preferably from 5,000 to 10,000,000. When the number-average molecular weight of the olefin-based thermoplastic elastomer is from 5,000 to 10,000,000, sufficient mechanical and physical properties and excellent processability are imparted to a thermoplastic resin material. From the same standpoint, the number-average molecular weight of the olefin-based thermoplastic elastomer is more preferably from 7,000 to 1,000,000, particularly preferably from 10,000 to 1,000,000. By this, the mechanical and physical properties and the processability of the thermoplastic resin material can be further improved. Meanwhile, from the standpoints of the toughness and the low-temperature flexibility, the number-average molecular weight of the polymer configuring the soft segment is preferably from 200 to 6,000. Further, from the standpoint of the moldability, the mass ratio (x:y) of the hard segment (x) and the soft segment (y) is preferably from 50:50 to 95:15, more preferably from 50:50 to 90:10.

An olefin-based thermoplastic elastomer can be synthesized by copolymerization in accordance with a known method.

As an olefin-based thermoplastic elastomer, an olefin-based thermoplastic elastomer modified with an acid may be used as well.

The term "olefin-based thermoplastic elastomer modified with an acid" used herein refers to an olefin-based thermoplastic elastomer bound with an unsaturated compound having an acidic group, such as a carboxylic acid group, a sulfuric acid group or a phosphoric acid group.

For the binding of the unsaturated compound having an acidic group, such as a carboxylic acid group, a sulfuric acid group or a phosphoric acid group, to the olefin-based thermoplastic elastomer, for example, an unsaturated bond moiety of an unsaturated carboxylic acid (e.g., generally maleic anhydride) is bound (e.g., graft-polymerized) as the unsaturated compound having an acidic group to the olefin-based thermoplastic elastomer.

From the standpoint of inhibiting deterioration of the olefin-based thermoplastic elastomer, the unsaturated compound having an acidic group is preferably an unsaturated compound having a carboxylic acid group that is a weak acid group, and examples thereof include acrylic acid, methacrylic acid, itaconic acid, crotonic acid, isocrotonic acid, and maleic acid.

As commercially available products of olefin-based thermoplastic elastomer, for example, "TAFMER" Series manufactured by Mitsui Chemicals, Inc. (e.g., A0550S, A1050S, A4050S, A1070S, A4070S, A35070S, A1085S, A4085S,

A7090, A70090, MH7007, MH7010, XM-7070, XM-7080, BL4000, BL2481, BL3110, BL3450, P-0275, P-0375, P-0775, P-0180, P-0280, P-0480, and P-0680), "NUCREL" Series manufactured by Du Pont-Mitsui Polychemicals Co., Ltd. (e.g., AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C), "ELVALOY AC" Series manufactured by Du Pont-Mitsui Polychemicals Co., Ltd. (e.g., 1125AC, 1209AC, 1218AC, 1609AC, 1820AC, 1913AC, 2112AC, 2116AC, 2615AC, 2715AC, 3117AC, 3427AC, and 3717AC), "ACRYFT" Series and "EVATATE" Series manufactured by Sumitomo Chemical Co., Ltd., "ULTRATHENE" Series manufactured by Tosoh Corporation, and "PRIME TPO" Series manufactured by Prime Polymer Co., Ltd. (e.g., E-2900H, F-3900H, E-2900, F-3900, J-5900, E-2910, F-3910, J-5910, E-2710, F-3710, J-5910, E-2740, F-3740, R110MP, R110E, T310E, and M142E) can be used.

(Thermoplastic Resins)

-Polyamide-Based Thermoplastic Resins-

Examples of the polyamide-based thermoplastic resins include polyamides configuring the hard segments of the above-described polyamide-based thermoplastic elastomers. Specific examples of the polyamide-based thermoplastic resins include a polyamide (Amide 6) obtained by ring-opening polycondensation of $\varepsilon$-caprolactam, a polyamide (Amide 11) obtained by ring-opening polycondensation of undecane lactam, a polyamide (Amide 12) obtained by ring-opening polycondensation of lauryl lactam, a polyamide (Amide 66) obtained by polycondensation of a diamine and a dibasic acid, and a polyamide (Amide MX) containing a *meta*-xylene diamine as a structural unit.

Amide 6 can be represented by, for example, $\{CO-(CH_2)_5-NH\}_n$; Amide 11 can be represented by, for example, $\{CO-(CH_2)_{10}-NH\}_n$; Amide 12 can be represented by, for example, $\{CO-(CH_2)_{11}-NH\}_n$; Amide 66 can be represented by, for example, $\{CO(CH_2)_4CONH(CH_2)_6NH\}_n$; and Amide MX can be represented by, for example, the below-described Formula (A-1), wherein n represents the number of repeating units.

As a commercially available product of Amide 6, for example, "UBE NYLON" Series (e.g., 1022B and 1011FB) manufactured by Ube Industries, Ltd. can be used. As a commercially available product of Amide 11, for example, "RILSAN B" Series manufactured by Arkema K.K. can be used. As a commercially available product of Amide 12, for example, "UBE NYLON" Series (e.g., 3024U, 3020U, and 3014U) manufactured by Ube Industries, Ltd. can be used. As a commercially available product of Amide 66, for example, "LEONA" Series (e.g., 1300S and 1700S) manufactured by Asahi Kasei Corporation can be used. As a commercially available product of Amide MX, for example, "MX NYLON" Series (e.g., S6001, S6021, and S6011) manufactured by Mitsubishi Gas Chemical Co., Inc. can be used.

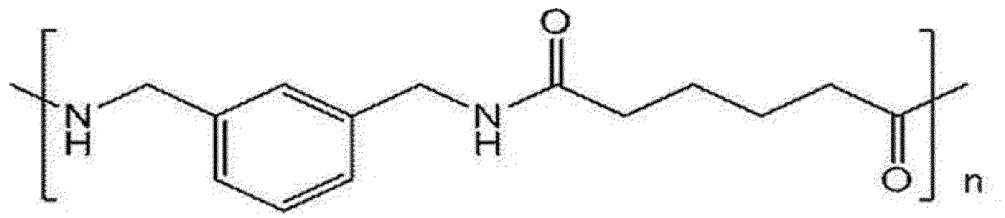

(A-1)

The polyamide-based thermoplastic resins may each be a homopolymer consisting of only the above-described structural unit, or a copolymer of the above-described structural unit and other monomer. In the case of a copolymer, the content ratio of the structural unit in the polyamide-based thermoplastic resin is preferably 40% by mass or higher.

-Polyester-Based Thermoplastic Resins-

Examples of the polyester-based thermoplastic resins include polyesters configuring the hard segments of the above-described polyester-based thermoplastic elastomers.

Specific examples of the polyester-based thermoplastic resins include aliphatic polyesters, such as polylactic acid, polyhydroxy-3-butyl butyrate, polyhydroxy-3-hexyl butyrate, poly($\varepsilon$-caprolactone), polyenantholactone, polycaprylolactone, polybutylene adipate, and polyethylene adipate; and aromatic polyesters, such as polyethylene terephthalate, polybutylene terephthalate, polyethylene naphthalate, and polybutylene naphthalate. Thereamong, from the standpoints of heat resistance and processability, polybutylene terephthalate is preferred as the polyester-based thermoplastic resin.

As commercially available products of polyester-based thermoplastic resin, for example, "DURANEX" Series (e.g., 2000, and 2002) manufactured by Polyplastics Co., Ltd., "NOVADURAN" Series (e.g., 5010R5 and 5010R3-2) manufactured by Mitsubishi Engineering-Plastics Corporation, and "TORAYCON" Series (e.g., 1401X06 and 1401X31) manufactured by Toray Industries, Inc. can be used.

-Olefin-Based Thermoplastic Resins-

Examples of the olefin-based thermoplastic resin includes polyolefins configuring the hard segments of the above-described olefin-based thermoplastic elastomers.

Specific examples of the olefin-based thermoplastic resins include polyethylene-based thermoplastic resins, polypropylene-based thermoplastic resins, and polybutadiene-based thermoplastic resins. Thereamong, from the standpoints of heat resistance and processability, a polypropylene-based thermoplastic resin is preferred as the olefin-based thermoplastic resin.

Specific examples of the polypropylene-based thermoplastic resins include propylene homopolymers, propylene-$\alpha$-olefin random copolymers, and propylene-$\alpha$-olefin block copolymers. Examples of the $\alpha$-olefin include $\alpha$-olefins having from 3 to 20 carbon atoms or so, such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradecene, 1-hexadecene, 1-octadecene, and 1-eicosene.

-Other Components-

The first bead filler may also contain other component(s) in addition to a resin (i.e., the resin A, or a mixture of the resin A and other resin). Examples of such other components include rubbers, various fillers (e.g., silica, calcium carbonate, and clay), age resistors, oils, plasticizers, color formers, and weather resistant agents.

[Second Bead Filler]

The second bead filler contains the resin B. It is noted here that the melting point of the resin B is lower than that of the resin A contained in the first bead filler.

As the resin B contained in the second bead filler, it is preferred to select a resin that has a skeleton, which is in common with the resin A contained in the first bead filler, among structural units configuring the main chain of the resin.

Examples of the resin B contained in the second bead filler include thermoplastic elastomers and thermoplastic resins.

From the standpoint of the ease of molding, the second bead filler contains, as the resin B, preferably a thermoplastic resin or a thermoplastic elastomer, more preferably a thermoplastic elastomer. Among thermoplastic elastomers, the second bead filler particularly preferably contains a polyamide-based thermoplastic elastomer or a polyester-based thermoplastic elastomer.

The second bead filler is satisfactory as long as it contains at least the resin B, and the second bead filler may also contain other resin (e.g., a thermoplastic resin or a thermoplastic elastomer) within a range that does not impair the effects of the disclosure (i.e., the second bead filler may be a mixture of the resin B and other resin). The second bead filler may further contain other component(s) such as additives. It is noted here, however, that the content of the resin B in the second bead filler is preferably not less than 50% by mass, more preferably not less than 60% by mass, still more preferably not less than 75% by mass, with respect to a total amount of the second bead filler.

Specific examples of the thermoplastic resin and the thermoplastic elastomer include those thermoplastic resins and thermoplastic elastomers that are enumerated above in the section describing the first bead filler, and preferred modes thereof are also as described above.

-Other Components-

The second bead filler may also contain other component(s) in addition to a resin (i.e., the resin B, or a mixture of the resin B and other resin). Examples of such other components include rubbers, various fillers (e.g., silica, calcium carbonate, and clay), age resistors, oils, plasticizers, color formers, and weather resistant agents.

[Covering Resin Layer]

In the bead member of the disclosure, the bead wire is preferably covered with a covering layer. The covering layer is preferably a layer containing a resin C (i.e., a covering resin layer), and the resin C is preferably a thermoplastic resin or a thermoplastic elastomer. The covering layer may be a layer that contains two or more resins, namely a mixture of the resin C and other resin (e.g., a thermoplastic resin or a thermoplastic elastomer).

In the followings, a case where the covering layer is a covering resin layer containing the resin C will be described.

The content of the resin (i.e., the resin C, or a mixture of the resin C and other resin) in the covering resin layer is preferably not less than 50% by mass, more preferably not less than 60% by mass, still more preferably not less than 75% by mass, with respect to a total amount of the covering resin layer.

Specific examples of the thermoplastic resin and the thermoplastic elastomer include those thermoplastic resins and thermoplastic elastomers that are enumerated above in the section describing the first bead filler.

-Other Components-

The covering resin layer may also contain other component(s) in addition to a resin (i.e., the resin C, or a mixture of the resin C and other resin). Examples of such other components include rubbers, various fillers (e.g., silica, calcium carbonate, and clay), age resistors, oils, plasticizers, color formers, and weather resistant agents.

(Physical Properties)

• Tensile Elastic Modulus (Covering Layer)

In the bead member of the disclosure, from the standpoint of further improving the air sealing performance, the covering layer has a tensile elastic modulus of preferably from 100 MPa to 2,200 MPa, more preferably from 100 MPa to 2,000 MPa, still more preferably from 120 MPa to 1,500 MPa, particularly preferably from 130 MPa to 1,000 MPa.
The tensile elastic modulus can be measured in the same manner as the tensile elastic modulus of the first bead filler.
The tensile elastic modulus of the covering layer can be adjusted based on, for example, the selection of the material(s) configuring the covering layer, particularly the selection of the material(s) of the resin(s) contained in the covering layer, such as the resin C.

• Melting Point (Resin C)

The melting point of the resin C contained in the covering layer is preferably from 164°C to 225°C, more preferably from 175°C to 223°C. Further, the resin C preferably has a melting point lower than that of the resin A.

-Thickness of Covering Layer-

The thickness of the covering layer is not particularly restricted. From the standpoint of attaining excellent durability and weldability, the thickness of the covering layer is preferably from 20 μm to 1,000 μm, more preferably from 30 μm to 700 μm.
The "thickness of the covering layer" refers to the length of the shortest part between the surface of the covering layer at the bead wire side (e.g., the interface between the covering layer and the bead wire or the below-described adhesive layer) and the outer surface of the covering layer (i.e., the surface at the side opposite to the bead wire).
The thickness of the covering layer is defined as a number-average value of the thickness of the thinnest part of the covering layer, which is measured on each of five enlarged images of cross-sections perpendicular to the lengthwise direction of the bead wire that are obtained at five arbitrary spots under a microscope such as a video microscope.

[Adhesive Layer]

The bead member of the disclosure may include an adhesive layer between the bead wire and the covering resin layer. The material of the adhesive layer is not particularly restricted, and any adhesive that is used in the bead portions of tires can be used.
The adhesive layer is preferably a layer that contains a resin D (i.e., adhesive resin layer), and this resin D is preferably a thermoplastic resin or a thermoplastic elastomer.
When the adhesive layer contains the resin D, the content ratio of the resin D is preferably 50% by mass or higher, more preferably 60% by mass or higher, still more preferably 75% by mass or higher, with respect to the whole adhesive layer.
Specific examples and the like of the thermoplastic resin and the thermoplastic elastomer include those thermoplastic resins and thermoplastic elastomers that are enumerated in the above paragraphs describing the first bead filler.
It is noted here, however, that the resin D contained in the adhesive layer is more preferably a polar functional group-containing thermoplastic resin or a polar functional group-containing thermoplastic elastomer (hereinafter, also simply referred to as "polar functional group-containing resin").
The term "polar functional group" used herein refers to a group that exhibits chemical reactivity (i.e., functionality) and brings about an intramolecular charge imbalance (i.e., polarity).
In the disclosure, it is believed that, by incorporating a polar functional group-containing resin into the adhesive layer, when the bead wire is a metal wire, the charge imbalance due to the polar functional group causes an interaction

between the adhesive layer and the hydrated hydroxy groups existing on the surface of the bead wire, and thereby provides an attractive force between the adhesive layer and the bead wire and allows a complex to be formed, as a result of which excellent adhesion is attained between the bead wire (e.g., metal wire) and the adhesive layer.

Further, when a covering resin layer is arranged via such an adhesive layer, the difference in rigidity between the bead wire (e.g., metal wire) and the bead filler can be reduced; therefore, it is presumed that the bead member including the bead wire can realize excellent adhesion durability.

-Polar Functional Group-Containing Resin-

Examples of the polar functional group-containing thermoplastic resin include polyester-based thermoplastic resins, olefin-based thermoplastic resins and polystyrene-based thermoplastic resins, which have a polar functional group.

Examples of the polar functional group-containing thermoplastic elastomer include polyester-based thermoplastic elastomers, olefin-based thermoplastic elastomers and polystyrene-based thermoplastic elastomers, which have a polar functional group.

These resins and elastomers may be used singly, or in combination of two or more kinds thereof.

Examples of the polar functional group contained in the polar functional group-containing resin include an epoxy group (a group represented by the below-described (1), wherein each of $R^{11}$, $R^{12}$ and $R^{13}$ independently represents a hydrogen atom or an organic group (e.g., an alkyl group)), a carboxy group (-COOH) and an anhydride group thereof, as well as an amino group ($-NH_2$), an isocyanate group (-NCO), a hydroxy group (-OH), an imino group (=NH), and a silanol group (-SiOH).

The "anhydride group" refers to a group in the form of an anhydride in which $H_2O$ is removed from two carboxy groups (a group in the form of an anhydride which is represented by the below-described (2-1), wherein $R^{21}$ represents a single bond or an alkylene group optionally having a substituent, and each of $R^{22}$ and $R^{23}$ independently represents a hydrogen atom or an organic group (e.g., an alkyl group)). The anhydride group represented by the below-described (2-1) is in the state represented by the below-described (2-2), i.e., a state of having two carboxy groups, when imparted with $H_2O$.

Among the above-described groups, from the standpoint of the adhesion with the bead wire, an epoxy group, a carboxy group and an anhydride group thereof, as well as a hydroxy group and an amino group are preferred.

Further, from the standpoint of the reactivity with an epoxy group, the polar functional group is preferably a carboxy group, an anhydride group thereof, a hydroxy group, or an amino group.

(1)

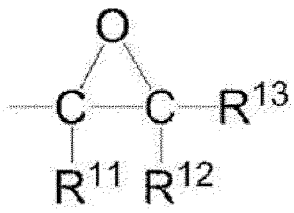

(2-1)

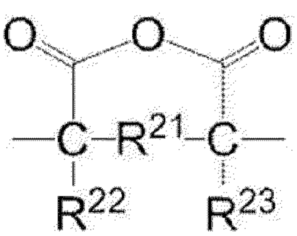

(2-2)

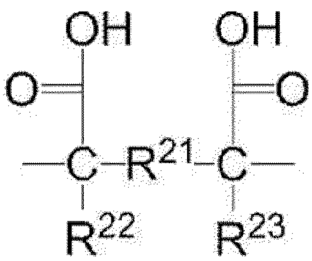

The polar functional group-containing resin can be obtained by modifying a thermoplastic resin or a thermoplastic elastomer with a compound that has a group serving as a polar functional group (i.e., a derivative). For example, the polar functional group-containing resin can be obtained by allowing a compound that has a group serving as a polar functional group along with other reactive group (e.g., an unsaturated group such as an ethylenic carbon-carbon double bond) to chemically bind to a thermoplastic resin or a thermoplastic elastomer (e.g., addition reaction or graft reaction).

Examples of the derivative (i.e., compound that has a group serving as a polar functional group) used for modifying a thermoplastic resin or a thermoplastic elastomer include reactive group-containing epoxy compounds; unsaturated carboxylic acids (e.g., methacrylic acid, maleic acid, fumaric acid, and itaconic acid); unsaturated carboxylic acid anhydrides (e.g., maleic anhydride, citraconic anhydride, itaconic anhydride, and glutaconic anhydride); other reactive group-containing carboxylic acids and anhydrides thereof; reactive group-containing amine compounds; reactive group-containing isocyanate compounds; reactive group-containing alcohols; and reactive group-containing silane compounds; and derivatives thereof.

Examples of the polyester-based thermoplastic resins include aliphatic polyester-based thermoplastic resins and aromatic polyester-based thermoplastic resins. The polyester-based thermoplastic resin prior to being modified with a compound that has a group serving as a polar functional group (i.e., a derivative) is the same as the polyester-based thermoplastic resin used in the first bead filler.

Examples of the olefin-based thermoplastic resins include polyethylene-based thermoplastic resins, polypropylene-based thermoplastic resins, and polybutadiene-based thermoplastic resins. The olefin-based thermoplastic resin prior to being modified with a compound that has a group serving as a polar functional group (i.e., a derivative) is the same as the olefin-based thermoplastic resin used in the first bead filler.

The polyester-based thermoplastic elastomer, olefin-based thermoplastic elastomer and polystyrene-based thermoplastic elastomer prior to being modified with a compound that has a group serving as a polar functional group (i.e., a derivative) are the same as the polyester-based thermoplastic elastomer, olefin-based thermoplastic elastomer and polystyrene-based thermoplastic elastomer used in the first bead filler.

(Synthesis Method)

A synthesis method of a polar functional group-containing resin will now be described concretely.

For example, a polar functional group-containing styrene-based elastomer can be obtained by introducing a polar functional group to an unmodified styrene-based elastomer. Specifically, in the case of a styrene-based elastomer containing an epoxy group as a polar functional group, it can be obtained by allowing an unmodified styrene-based elastomer and an epoxidizing agent to react with each other in the presence of a solvent and a catalyst if necessary. Examples of the epoxidizing agent include hydroperoxides, such as hydrogen peroxide, tert-butyl hydroperoxide, and cumene hydroperoxide; and peracids, such as performic acid, peracetic acid, perbenzoic acid, and trifluoroperacetic acid.

As one example of the synthesis method, a method of modifying a polyester-based thermoplastic elastomer (TPC) with an unsaturated carboxylic acid or an anhydride thereof is described below in detail.

A polar functional group-containing polyester-based thermoplastic elastomer (hereinafter, also simply referred to as "polar group-containing TPC") can be obtained by, for example, a modification treatment of a molten saturated polyester-based thermoplastic elastomer containing a polyalkylene ether glycol segment with an unsaturated carboxylic acid or a derivative thereof.

The term "modification" used herein refers to, for example, graft modification of a saturated polyester-based thermoplastic elastomer containing a polyalkylene ether glycol segment with an unsaturated carboxylic acid or a derivative thereof, terminal modification of such a thermoplastic elastomer, modification of such a thermoplastic elastomer by means of a transesterification reaction, or modification of such a thermoplastic elastomer by means of a decomposition reaction. Specifically, a site to which the unsaturated carboxylic acid or derivative thereof is bound is considered to be a terminal functional group or an alkyl chain moiety, and examples thereof particularly include terminal carboxylic acids, terminal hydroxy groups, and carbon atoms existing at the $\alpha$- and $\beta$-positions with respect to the ether linkage of the polyalkylene ether glycol segment. It is presumed that the unsaturated carboxylic acid or derivative thereof is mostly bound at the $\alpha$-position with respect to the ether linkage of the polyalkylene ether glycol segment in particular.

(1) Blending Materials

(A) Saturated Polyester-Based Thermoplastic Elastomer

The saturated polyester-based thermoplastic elastomer is usually a block copolymer composed of a soft segment containing a polyalkylene ether glycol segment and a hard segment containing a polyester.

The content of the polyalkylene ether glycol segment in the saturated polyester-based thermoplastic elastomer is preferably from 58 to 73% by mass, more preferably from 60 to 70% by mass.

Examples of the polyalkylene ether glycol configuring the soft segment include polyethylene glycols, poly(propylene ether) glycols (it is noted here that "propylene ether" contains at least one of 1,2-propylene ether and 1,3-propylene ether), poly(tetramethylene ether) glycols, and poly(hexamethylene ether) glycols, among which a poly(tetramethylene ether) glycol is particularly preferred. In the disclosure, the polyalkylene ether glycol has a number-average molecular weight of preferably from 400 to 6,000, more preferably from 600 to 4,000, particularly preferably from 1,000 to 3,000.

The term "number-average molecular weight" used herein refers to a value determined by gel permeation chromatography (GPC). For calibration of GPC, POLYTETRAHYDROFURAN CALIBRATION KIT manufactured by Polymer Laboratories Ltd. (UK) may be employed.

The saturated polyester-based thermoplastic elastomer can be obtained by, for example, polycondensation of oligomers that are obtained by means of an esterification reaction or a transesterification reaction using, as raw materials, (i) at least one selected from aliphatic diols and alicyclic diols, which have from 2 to 12 carbon atoms, ii) at least one selected from aromatic dicarboxylic acids, alicyclic dicarboxylic acids, and alkyl esters thereof, and iii) a polyalkylene ether glycol having a number-average molecular weight of from 400 to 6,000.

As an aliphatic diol having from 2 to 12 carbon atoms and an alicyclic diol having from 2 to 12 carbon atoms, raw materials of a polyester, particularly those usually used as raw materials of a polyester-based thermoplastic elastomer can be used. Examples thereof include ethylene glycol, propylene glycol, trimethylene glycol, 1,4-butanediol, 1,4-cyclohexanediol, and 1,4-cyclohexane dimethanol. Thereamong, 1,4-butanediol and ethylene glycol are preferred, and 1,4-butanediol is particularly preferred. These diols may be used singly, or as a mixture of two or more kinds thereof.

As an aromatic dicarboxylic acid and an alicyclic dicarboxylic acid, raw materials of a polyester, particularly those generally used as raw materials of a polyester-based thermoplastic elastomer can be used. Examples thereof include terephthalic acid, isophthalic acid, phthalic acid, 2,6-naphthalenedicarboxylic acid, and cyclohexanedicarboxylic acid. Thereamong, terephthalic acid and 2,6-naphthalenedicarboxylic acid are preferred, and terephthalic acid is particularly suitable. These dicarboxylic acids may be used singly, or in combination of two or more kinds thereof. As for the use of an alkyl ester of an aromatic dicarboxylic acid or alicyclic dicarboxylic acid, for example, dimethyl esters and diethyl esters of the above-described dicarboxylic acids can be used. Thereamong, dimethyl terephthalate and 2,6-dimethyl naphthalate are preferred.

In addition to the above-described components, a trifunctional triol or tricarboxylic acid, or an ester thereof may be copolymerized in a small amount. Further, an aliphatic dicarboxylic acid such as adipic acid, or a dialkyl ester thereof can also be used as a copolymerizable component.

Examples of commercially available products of such a polyester-based thermoplastic elastomer include "PRIMALLOY" manufactured by Mitsubishi Chemical Corporation, "PELPRENE" manufactured by TOYOBO Co., Ltd., and "HYTREL" manufactured by DuPont-Toray Co., Ltd.

(B) Unsaturated Carboxylic Acid or Derivative Thereof

Examples of the unsaturated carboxylic acid or derivative thereof include unsaturated carboxylic acids, such as acrylic acid, maleic acid, fumaric acid, tetrahydrophthalic acid, itaconic acid, citraconic acid, crotonic acid, and isocrotonic acid; unsaturated carboxylic acid anhydrides, such as 2-octen-1-yl succinic anhydride, 2-dodecen-1-yl succinic anhydride, 2-octadecen-1-yl succinic anhydride, maleic anhydride, 2,3-dimethylmaleic anhydride, bromomaleic anhydride, dichloromaleic anhydride, citraconic anhydride, itaconic anhydride, 1-butene-3,4-dicarboxylic anhydride, 1-cyclopentene-1,2-dicarboxylic anhydride, 1,2,3,6-tetrahydrophthalic anhydride, 3,4,5,6-tetrahydrophthalic anhydride, exo-3,6-epoxy-1,2,3,6-tetrahydrophthalic anhydride, 5-norbornene-2,3-dicarboxylic anhydride, methyl-5-norbornene-2,3-dicarboxylic anhydride, endo-bicyclo[2.2.2]oct-5-ene-2,3-dicarboxylic anhydride, and bicyclo[2.2.2]oct-7-ene-2,3,5,6-tetracarboxylic anhydride; and unsaturated carboxylic acid esters, such as methyl (meth)acrylate, ethyl (meth)acrylate, propyl (meth)acrylate, butyl (meth)acrylate, hexyl (meth)acrylate, octyl (meth)acrylate, 2-ethylhexyl (meth)acrylate, lauryl (meth)acrylate, stearyl (meth)acrylate, glycidyl methacrylate, dimethyl maleate, (2-ethylhexyl) maleate, and 2-hydroxyethyl methacrylate. Thereamong, unsaturated carboxylic acid anhydrides are preferred. Any of these unsaturated bond-containing compounds may be selected as appropriate in accordance with the copolymer containing a polyalkylene ether glycol segment to be modified and the modification conditions. Further, the above-described compounds may be used singly, or in combination of two or more thereof. The unsaturated bond-containing compound(s) can be added in the form of being dissolved in an organic solvent or the like.

(C) Radical Generator

Examples of a radical generator used for performing a radical reaction in the modification treatment include organic and inorganic peroxides, such as t-butyl hydroperoxide, cumene hydroperoxide, 2,5-dimethylhexane-2,5-dihydroperoxide, 2,5-dimethyl-2,5-bis(*tert*-butyloxy)hexane, 3,5,5-trimethylhexanoyl peroxide, *t*-butyl peroxybenzoate, benzoyl peroxide, dicumyl peroxide, 1,3-bis(*t*-butylperoxyisopropyl)benzene, dibutyl peroxide, methyl ethyl ketone peroxide, potassium peroxide, and hydrogen peroxide; azo compounds, such as 2,2'-azobisisobutyronitrile, 2,2'-azobis(isobutylamide) dihalides, 2,2'-azobis[2-methyl-*N*-(2-hydroxyethyl)propionamide], and azodi-*t*-butane; and carbon radical generators, such as dicumyl. Any of these radical generators may be selected as appropriate in accordance with, for example, the types of the saturated polyester-based thermoplastic elastomer containing a polyalkylene ether glycol segment and the unsaturated carboxylic acid or derivative thereof that are used in the modification treatment, and the modification

conditions. Further, the above-described radical generators may be used singly, or in combination of two or more thereof. The radical generator(s) can be added in the form of being dissolved in an organic solvent or the like. Moreover, in order to further improve the adhesion, an unsaturated bond-containing compound (i.e., the below-described (D)) can also be used as a modification aid in combination with the radical generator(s).

(D) Unsaturated Bond-Containing Compound

The "unsaturated bond-containing compound" refers to a compound having a carbon-carbon multiple bond other than the above-described (B) unsaturated carboxylic acid or derivative thereof, and specific examples thereof include vinyl aromatic monomers, such as styrene, methylstyrene, ethylstyrene, isopropylstyrene, phenylstyrene, o-methylstyrene, 2,4-dimethylstyrene, o-chlorostyrene, and o-chloromethylstyrene. Incorporation of any of these compounds is expected to improve the modification efficiency.

(2) Additional Blending Materials (Optional Components)

In the adhesive used for the formation of the adhesive layer, optional components can be incorporated in addition to the polar group-containing TPC. Specifically, a resin component, a rubber component, and various additives such as a filler (e.g., talc, calcium carbonate, mica, or glass fiber), a plasticizer (e.g., paraffin oil), an antioxidant, a heat stabilizer, a light stabilizer, an ultraviolet absorber, a neutralizing agent, a lubricant, an anti-fogging agent, an anti-blocking agent, a slip agent, a crosslinking agent, a crosslinking aid, a colorant, a flame retardant, a dispersant, an antistatic agent, an antimicrobial agent, and a fluorescent brightener can be added. Thereamong, it is preferred to add at least one of phenolic, phosphite-based, thioether-based, or aromatic amine-based antioxidants.

(3) Blending Ratio

With regard to the blending ratio of the respective components configuring the polar group-containing TPC, the blending ratio of the (B) unsaturated carboxylic acid or derivative thereof is preferably from 0.01 to 30 parts by mass, more preferably from 0.05 to 5 parts by mass, still more preferably from 0.1 to 2 parts by mass, particularly preferably from 0.1 to 1 part by mass, with respect to 100 parts by mass of the (A) saturated polyester-based thermoplastic elastomer. Further, the blending ratio of the (C) radical generator is preferably from 0.001 to 3 parts by mass, more preferably from 0.005 to 0.5 parts by mass, still more preferably from 0.01 to 0.2 parts by mass, particularly preferably from 0.01 to 0.1 parts by mass, with respect to 100 parts by mass of the (A) saturated polyester-based thermoplastic elastomer.

The modification amount of the polar group-containing TPC, which is determined by infrared absorption spectrometry, is desired to be from 0.01 to 15, preferably from 0.03 to 2.5, more preferably from 0.1 to 2.0, particularly preferably from 0.2 to 1.8, in terms of the value of the following Formula:

$$A_{1786}/(Ast \times r)$$

[wherein, $A_{1786}$ represents a peak intensity at 1,786 $cm^{-1}$, which is measured for a 20 μm-thick film of the polar group-containing TPC; Ast represents a peak intensity at a reference wavenumber, which is measured for a 20 μm-thick film of a standard sample (i.e., a saturated polyester-based elastomer having a polyalkylene ether glycol segment content of 65% by mass); and r represents a value obtained by dividing the molar fraction of the polyester segment in the polar group-containing TPC by the molar fraction of the polyester segment in the standard sample].

A method of determining the modification amount of the polar group-containing TPC by infrared absorption spectrometry is as follows. In other words, a film-form sample of 20 μm in thickness is vacuum-dried at 100°C for 15 hours to remove any unreacted matter, and the infrared absorption spectrum of this sample is measured. From the thus obtained spectrum, the height of an absorption peak appearing at 1,786 $cm^{-1}$, which is attributed to stretching vibration of a carbonyl group originating from an acid anhydride (a tangent line connecting the bases on the respective sides of the absorption band in a range of from 1,750 to 1,820 $cm^{-1}$ is taken as a baseline), is calculated as "peak intensity $A_{1786}$". Meanwhile, the infrared absorption spectrum is also measured in the same manner for a 20 μm-thick film of the standard sample (i.e., a saturated polyester-based elastomer having a polyalkylene ether glycol segment content of 65% by mass). From the thus obtained spectrum, the height of a peak at a reference wavenumber, for example, in the case of a benzene ring-containing aromatic polyester-based elastomer, the height of an absorption peak appearing at 872 $cm^{-1}$ which is attributed to out-of-plane deformation of C-H of the benzene ring (a tangent line connecting the bases on the respective sides of the absorption band in a range of from 850 to 900 $cm^{-1}$ is taken as a baseline), is calculated as "peak intensity Ast". The peak at a reference wavenumber may be selected from hard segment-derived absorption peaks that

are not influenced by the modification and have no overlapping absorption peak in the vicinity. From the thus calculated peak intensities, the modification amount based on infrared absorption spectrometry is calculated in accordance with the above-described Formula. In this process, as "r", a value obtained by dividing the molar fraction of the polyester segment in the polar group-containing TPC, for which the modification amount is to be determined, by the molar fraction of the polyester segment in the standard sample is used. Further, the molar fraction (mr) of the polyester segment in each sample is calculated by the following Formula from the mass fractions of the polyester segment and the polyalkylene ether glycol segment ($w_1$ and $w_2$) and the molecular weights of the monomer units configuring the respective segments ($e_1$ and $e_2$).

$$mr = (w_1/e_1)/[(w_1/e_1) + (w_2/e_2)]$$

(4) Blending Method

The polar group-containing TPC is synthesized by, for example, modifying the (A) saturated polyester-based thermoplastic elastomer with the (B) unsaturated carboxylic acid or derivative thereof in the presence of the (C) radical generator. In this process, it is preferred to use the component (A) in the form of a melt since this enables to perform a reaction between the component (A) and the component (B) more efficiently and sufficient modification is thereby realized. For example, a method in which the component (A) in a non-molten state is preliminarily mixed with the component (B) and the component (A) is subsequently melted and allowed to react with the component (B) can be preferably employed as well.

For the mixing of the component (A) with the component (B), it is preferred to select a so-called melt-kneading method that uses a kneading machine capable of applying a sufficient shear stress. The kneading machine used in the melt-kneading method can be arbitrarily selected from ordinary kneading machines, such as a mixing roll, a sigma-type rotary blade-equipped kneading machine, a Banbury mixer, a high-speed twin-screw continuous mixer, and a uniaxial, biaxial or multiaxial extruder-type kneading machine. Thereamong, a biaxial extruder is preferred from the standpoint of attaining a high reaction efficiency and a low production cost. Melt-kneading can be performed after uniformly mixing the powder-form or granular component (A), the component (B) and the component (C) along with, if necessary, the component (D) and other additives exemplified above as additional blending materials (optional components) at a prescribed mixing ratio using a Henschel mixer, a ribbon blender, a V-type blender or the like. The kneading temperature of these components is preferably in a range of from 100°C to 300°C, more preferably in a range of from 120°C to 280°C, particularly preferably in a range of from 150°C to 250°C, taking into consideration the thermal degradation of the component (A) and the half-life temperature of the component (C). Practically, the optimum kneading temperature is in a range of from a temperature that is higher than the melting point of the component (A) by 20°C to the melting temperature of the component (A). The order and the method of kneading the components are not particularly restricted, and a method of kneading the components (A), (B) and (C) and the additional blending materials such as the component (D) all together at once may be employed. Alternatively, a method of kneading some of the components (A) to (D) and subsequently kneading the remaining components including the additional blending materials may be employed as well. However, when the component (C) is incorporated, it is preferred to add the component (C) simultaneously with the components (B) and (D) from the standpoint of improving the adhesion.

-Other Components-

The adhesive layer may also contain a component(s) other than an adhesive such as the resin D. Examples of such other components include carbon blacks, radical scavengers, rubbers, elastomers, various fillers (e.g., silica, calcium carbonate, and clay), age resistors, oils, plasticizers, color formers, and weather resistant agents.

(Physical Properties)

• Tensile Elastic Modulus of Adhesive Layer

The adhesive layer is preferably a layer that has a lower tensile elastic modulus than the covering resin layer. The tensile elastic modulus of the adhesive layer can be controlled based on, for example, the type of an adhesive used for the formation of the adhesive layer, the conditions for the formation of the adhesive layer, and the thermal history (e.g., heating temperature and heating time).

For example, a lower limit value of the tensile elastic modulus of the adhesive layer is preferably not lower than 1 MPa, more preferably not lower than 20 MPa, still more preferably not lower than 50 MPa. With the tensile elastic

modulus being not lower than this lower limit value, the adhesive layer exhibits excellent adhesion performance with the bead wire, and excellent tire durability is attained.

Meanwhile, from the standpoint of the riding comfort, an upper limit value of the tensile elastic modulus of the adhesive layer is preferably not higher than 1,500 MPa, more preferably not higher than 600 MPa, still more preferably not higher than 400 MPa.

The tensile elastic modulus of the adhesive layer can be measured in the same manner as the tensile elastic modulus of the first bead filler.

Further, when the tensile elastic modulus of the adhesive layer is denoted as $E_1$ and the tensile elastic modulus of the covering resin layer is denoted as $E_2$, the value of $E_1/E_2$ is, for example, from 0.05 to 0.5, and it is preferably from 0.05 to 0.3, more preferably from 0.05 to 0.2. By controlling the value of $E_1/E_2$ to be in this range, superior tire durability is attained as compared to a case where the value of $E_1/E_2$ is smaller than the above-described range, and superior riding comfort during running is attained as compared to a case where the value of $E_1/E_2$ is larger than the above-described range.

• Melting Point (Resin D)

The resin D contained in the adhesive layer has a melting point of preferably from 139°C to 225°C, more preferably from 139°C to 220°C.

With a lower limit value of the melting point being in this range, excellent heat resistance against heating (e.g., vulcanization) during the tire production is attained. Further, with the melting point being in the above-described range, the resin D can be easily controlled to have a melting point that is close to that of the resin C contained in the covering resin layer, and this enables to attain superior adhesion.

The melting point of the resin D can be measured in the same manner as the melting point of the resin A.

• Thickness of Adhesive Layer

The average thickness of the adhesive layer is not particularly restricted; however, from the standpoints of the riding comfort during running and the tire durability, it is preferably from 5 μm to 500 μm, more preferably from 20 μm to 150 μm, still more preferably 20 μm to 100 μm.

The average thickness of the adhesive layer is defined as a number-average value of the thickness of the adhesive layer, which is measured on each of enlarged images of cross-sections perpendicular to the lengthwise direction of the bead wire that are obtained at five arbitrary spots under a microscope such as a video microscope. The thickness of the adhesive layer in each enlarged image is defined as a value measured for a part having the smallest thickness (i.e., a part where the distance from an interface of the bead wire and the adhesive layer to an interface of the adhesive layer and the covering resin layer is the smallest).

Further, when the average thickness of the adhesive layer is denoted as $T_1$ and the average thickness of the covering resin layer is denoted as $T_2$, the value of $T_1/T_2$ is, for example, from 0.1 to 0.5, preferably from 0.1 to 0.4, more preferably from 0.1 to 0.35. By controlling the value of $T_1/T_2$ to be in this range, superior riding comfort during running is attained as compared to a case where the value of $T_1/T_2$ is smaller than the above-described range, and superior tire durability is attained as compared to a case where the value of $T_1/T_2$ is larger than the above-described range.

<Method of Producing Bead Member for Tire>

Next, a method of producing the bead member of the disclosure will be described.

A method of producing the bead member of the disclosure is not particularly restricted. For example, when the bead member is one in which the first bead filler is in contact with at least a part of the second bead filler, examples of a method of adhering the first bead filler and the second bead filler include the following methods.

(1) Production Method in Which at Least Either of First Bead Filler and Second Bead Filler is Molded by Injection Molding and First Bead Filler and Second Bead Filler are Adhered

• Placement Step

First, the bead wire or a member containing the bead wire, and the first bead filler or the second bead filler are placed in a mold. For example, when the bead wire is covered with a covering resin layer, examples of the member containing the bead wire include a member that contains the bead wire and the covering resin layer. Further, when an adhesive resin layer is arranged between the bead wire and the covering resin layer, examples of the member containing the bead wire include a member that contains the bead wire, the adhesive resin layer and the covering resin layer.

• Injection Forming Step

Next, a resin composition for the formation of either the first or the second bead filler not placed in the placement step is injected into the mold. The first bead filler and the second bead filler can be adhered by allowing the injected resin composition to solidify.

In the placement step, it is preferred to place the second bead filler of the first and the second bead fillers in a mold and, in the injection forming step, it is preferred to inject a resin composition for the formation of the first bead filler, namely a resin composition containing the resin A, into the mold. By forming the first bead filler by injection molding on the second bead filler previously placed in the mold, not only the first bead filler and the second bead filler can be adhered but also the first bead filler and the bead wire or the member containing the bead wire can be adhered as well. When the bead fillers are formed in this order, the resin composition containing the high-melting-point resin A is supplied onto the surface of the second bead filler containing the low-melting-point resin B, and in this case, the melting heat is utilized to weld the bead fillers together, whereby melting adhesion can be easily conducted and sufficient adhesion strength can be obtained.

(2) Production Method in Which First Bead Filler and Second Bead Filler Are Adhered by Welding

• Welding Step

The first bead filler and the second bead filler can be welded together by melting either or both of the surface of the first bead filler and the surface of the second bead filler and subsequently putting them together via molten parts. It is preferred that the surfaces of both the first and the second bead fillers are melted to be welded together.

Examples of a welding method include the followings.

- Hot plate welding: i.e., a method of melting at least either of the first bead filler and the second bead filler by pressing thereagainst a heated plate-form member (e.g., a metal plate) and thereby welding the bead fillers together.
- Laser welding: i.e., a method of melting at least either of the first bead filler and the second bead filler by laser irradiation and thereby welding the bead fillers together.

When the bead member is one in which the first bead filler is in contact with at least a part of the second bead filler, from the standpoint of improving the adhesion of the first bead filler and the second bead filler, the difference between the melting point of the resin A and that of the resin B [i.e., (melting point of resin A) - (melting point of resin B)] is preferably from 1°C to 70°C, more preferably from 1°C to 60°C, still more preferably from 1°C to 50°C. Further, it is preferably 30°C or lower, and particularly preferably from 1°C to 30°C.

<Tire>

Next, the tire according to the disclosure, which includes the bead member for a tire of the disclosure in a pair of bead portions, will be described.

[First Embodiment]

Taking a run-flat tire as an example, one embodiment of the tire of the disclosure will now be described referring to the drawings.

FIG. 1 illustrates one side of a cross-section cut along a width direction of a tire 10 of a first embodiment. In FIG. 1, an arrow TW indicates the width direction of the tire 10 (i.e., tire width direction), and an arrow TR indicates the radial direction of the tire 10 (i.e., tire radial direction). The term "tire width direction" used herein means the direction parallel to the rotation axis of the tire 10 and is also referred to as "tire axial direction". Meanwhile, the term "tire radial direction" used herein means the direction perpendicular to the rotation axis of the tire 10. A symbol CL indicates the equator of the tire 10 (so-called tire equator).

Further, in the first embodiment, a rotation axis side of the tire 10 along the tire radial direction is referred to as "tire radial-direction inner side", and a side opposite to the rotation axis of the tire 10 along the tire radial direction is referred to as "tire radial-direction outer side". Meanwhile, a tire equator CL side along the tire width direction is referred to as "tire width-direction inner side", and a side opposite to the tire equator CL along the tire width direction is referred to as "tire width-direction outer side".

FIG. 1 illustrates the tire 10 in a state of being mounted on a standard rim 30 (indicated by a chain double-dashed line in FIG. 1) and inflated to a standard air pressure. The term "standard rim" used herein refers to a standard rim of an application size, which is prescribed in YEAR BOOK 2017 of The Japan Automobile Tyre Manufacturers

Association, Inc. (JATMA). Further, the term "standard air pressure" used herein refers to an air pressure that corresponds to the maximum load capacity prescribed in YEAR BOOK 2017 of JATMA.

In the following descriptions, the term "load" refers to a maximum load on a single wheel at the application size (i.e., maximum load capacity), which is prescribed in the below-described respective standards; the term "internal pressure" refers to an air pressure corresponding to the maximum load on a single wheel (i.e., maximum load capacity), which is prescribed in the below-described respective standards; and the term "rim" refers to a standard rim (or "Approved Rim" or "Recommended Rim") of the application size, which is prescribed in the below-described respective standards. A standard is determined in accordance with the industrial standard that is valid in each region where the tire is manufactured or used. For example, the standard is defined by "Year Book of The Tire and Rim Association, Inc." in the U.S., "Standard Manual of The European Tyre and Rim Technical Organisation" in Europe, or "JATMA Year Book" of The Japan Automobile Tyre Manufacturers Association, Inc. in Japan.

The tire 10 of the first embodiment illustrated in FIG. 1 is a tire having an aspect ratio of 55 or higher, and the tire cross-sectional height (i.e., tire section height) SH is set at 115 mm or greater. The term "section height" (i.e., tire cross-sectional height) SH used herein refers to a half (1/2) length of the difference between the tire outer diameter and the rim diameter in a state where the tire 10 is mounted on the standard rim 30 and the internal pressure is adjusted to be the standard air pressure. In the first embodiment, the aspect ratio of the tire 10 is set at 55 or higher and the tire cross-sectional height SH is set at 115 mm or greater; however, the disclosure is not restricted to this configuration.

As illustrated in FIG. 1, the tire 10 includes: a pair of right and left bead portions 12 (it is noted here that FIG. 1 illustrates only the bead portion 12 on one side); a pair of tire side portions 14 each extending from the pair of the bead portions 12 to the tire radial-direction outer side; and a tread portion 16 extending from one tire side portion 14 to the other tire side portion 14. The tire side portions 14 bear a load acting on the tire 10 during running (including run-flat running).

As illustrated in FIG. 1, bead cores 18 are each embedded in the pair of the bead portions 12. A carcass 22 extends between the pair of the bead cores 18. The end sides of this carcass 22 are anchored on the respective bead cores 18. The carcass 22 of the first embodiment is anchored with its end sides being folded back around the respective bead cores 18 from the inner side toward the outer side of the tire, and an end portion 22C of each folded section 22B is in contact with a carcass main body 22A. In the first embodiment, the end portions 22C of the carcass 22 are arranged in the respective tire side portions 14; however, the disclosure is not restricted to this configuration. For example, the end portions 22C of the carcass 22 may be arranged in the tread portion 16, for example, in a range corresponding to a belt layer 24A.

Further, the carcass 22 toroidally extends from one bead core 18 to the other bead core 18, configuring the skeleton of the tire 10.

At the tire radial-direction outer side of the carcass main body 22A, plural (two in the first embodiment) belt layers 24A are arranged. At the tire radial-direction outer side of these belt layers 24A, a cap layer 24B is arranged. The cap layer 24B covers the entirety of the belt layers 24A.

At the tire radial-direction outer side of the cap layer 24B, a pair of layered layers 24C is arranged in such a manner to cover the respective end portions of the cap layer 24B. It is noted here that the disclosure is not restricted to the above-described configuration, and only the end portion of one side of the cap layer 24B may be covered with the layered layer 24C, or both end portions of the cap layer 24B may be covered with a single layered layer 24C that is continuous in the tire width direction. Moreover, depending on the specifications of the tire 10, the cap layer 24B and the layered layer 24C may be omitted.

For the carcass 22, the belt layers 24A, the cap layer 24B and the layered layers 24C, those configurations of the respective members that are used in conventionally known tires (including run-flat tires) can be employed.

The tread portion 16 is arranged at the tire radial-direction outer side of the belt layers 24A, the cap layer 24B and the layered layers 24C. The tread portion 16 is a part that comes into contact with the road surface during running, and plural circumferential grooves 16A extending in the tire circumferential direction are formed on the surface of the tread portion 16. In addition, on the tread portion 16, widthwise grooves (not illustrated) extending in the tire width direction are formed as well. The shape and the number of the circumferential grooves 16A and those of the widthwise grooves are set as appropriate in accordance with the performance required for the tire 10, such as water drainage and steering stability.

• Bead Fillers

In each of the bead portions 12, a bead filler 100 extending from the bead core 18 to the tire radial-direction outer side along an outer surface 22O of the carcass 22 is embedded. Specifically, the bead filler 100 is embedded in a region enclosed by the carcass main body 22A and the folded section 22B.

In more detail, a first bead filler 101 contains the resin A having a higher melting point than the resin B, and is arranged in a region including a region at the tire radial-direction outer side of the bead core 18. The first bead filler 101

has a shape that extends from the region where the bead core 18 is arranged toward the tire radial-direction outer side. In the first embodiment, the first bead filler 101 is formed in such a manner to cover the entire surface of the bead core 18, i.e., arranged in such a manner to extend into a region at the tire radial-direction inner side of the bead core 18.

A second bead filler 102 contains the resin B having a lower melting point than the resin A, and is arranged in a region including a region at the outer side of the first bead filler 101. The second bead filler 102 is arranged such that there is an overlap in the tire radial direction between the region where the first bead filler 101 is arranged and the region where the second bead filler 102 is arranged. Further, the second bead filler 102 is in contact with a part of the tire width-direction outer surface of the first bead filler 101. The second bead filler 102 has a shape that extends from this contact surface of the first bead filler 101 toward the tire radial-direction outer side.

In the first embodiment, the bead filler 100 is configured such that the closer to the tire radial-direction inner side (i.e., bead wire side), the larger is the volume occupied by the first bead filler 101 than the volume occupied by the second bead filler 102, while the closer to the tire radial-direction outer side (i.e., opposite side to the bead wires), the larger is the volume occupied by the second bead filler 102 than the volume occupied by the first bead filler 101.

The outer surface 22O of the carcass 22 is at the tire outer side in the carcass main body 22A, while it is at the tire inner side in the folded section 22B. Further, in the first embodiment, an end portion 20A of the second bead filler 102 at the tire radial-direction outer side extends into the tire side portion 14.

A height BH of the bead filler 100 illustrated in FIG. 1 is preferably set in a range of from 30 to 50% of the tire cross-sectional height SH. It is noted here that the term "height BH" used herein for the bead filler 100 refers to the height measured from the end portion 20A of the bead filler 100 at the tire radial-direction outer side to the tip of the bead portion 12 (i.e., length along the tire radial direction) in a state where the tire 10 is mounted on the standard rim 30 and the internal pressure is adjusted to be the standard air pressure. By controlling the height BH of the bead filler 100 to be not less than 30% of the tire cross-sectional height SH, for example, sufficient durability in run-flat running can be ensured. Further, by controlling the height BH of the bead filler 100 to be not more than 50% of the tire cross-sectional height SH, excellent riding comfort is attained.

In the first embodiment, the end portion 20A of the bead filler 100 is arranged at the tire radial-direction inner side of a maximum width position of the tire 10. The term "maximum width position" used herein for the tire 10 refers to a position at which the tire 10 has the largest width along the tire width direction.

Prior to the formation of the first bead filler (e.g., by injection molding), an adhesive may be applied to at least either of the bead core and the second bead filler so as to improve the adhesion between the covering resin layer and the first bead filler as well as between the second bead filler and the first bead filler.

• Bead Cores

As illustrated in FIG. 2, each of the bead cores 18 includes: plural bead wires 1 which are arranged in an array; and a covering resin layer 3 which contains the resin D and covers the bead wires 1.

The phrase "arranged in an array" used herein for the above-described configuration means a positional relationship in which the plural bead wires 1 do not intersect with each other in the bead member that is cut at a length required for the application thereof to a tire.

Forms that can be taken by the bead core 18 illustrated in FIG. 2 will now be described referring to several examples.

FIG. 3A is a drawing that schematically illustrates a cross-section obtained by cutting a part of the bead core 18 perpendicular to the lengthwise direction of the bead wires 1. In FIG. 3A, the covering resin layer 3 is arranged in direct contact with three bead wires 1. The bead core 18 may be prepared by laterally or vertically stacking each bead wire 1 while welding with heat.

The bead core 18 may also include adhesive layers 2 that are arranged between the respective bead wires 1 and the covering resin layer 3. The adhesive layers 2 are each preferably an adhesive resin layer containing the above-described resin D.

In the part of the bead core 18 that is illustrated in FIG. 3B, the adhesive layers 2 are arranged on the surfaces of the respective three bead wires 1, and the covering resin layer 3 is further arranged thereon.

Alternatively, the adhesive layers 2 arranged between the bead wires 1 and the covering resin layer 3 may take a mode of being connected together in such a manner to envelop plural bead wires 1.

The part of the bead core 18 that is illustrated in FIG. 3C has a mode in which a continuous adhesive layer 2 is arranged in such a manner to envelop three bead wires 1, and the covering resin layer 3 is further arranged on the surface of this continuous adhesive layer 2.

FIGs. 3A to 3C each illustrate a mode in which three bead wires 1 are arranged in parallel to one another; however, the number of the bead wires 1 may be two or less, or four or more.

Further, the bead core 18 illustrated in FIG. 2 has a form in which the three wires 1 and the covering resin layer 3 that are illustrated in one of FIGs. 3A to 3C (and the adhesive layer(s) 2 in FIG. 3B or 3C) are disposed in three layers.

It is noted here, however, that the bead core 18 may be used in a single layer, or may be disposed in two or more layers. In the latter case, it is preferred to weld the covering resin layers.

Forms that can be taken by the bead core 18 have thus been described referring to FIGs. 3A to 3C; however, the disclosure is not restricted to these configurations.

A method of producing the bead core 18 is not particularly restricted. For example, in the case of producing the bead core 18 illustrated in FIG. 3B, the bead core 18 can be produced by an extrusion molding method using the bead wires 1, a material forming the adhesive layer 2 (preferably a material containing the resin D), and a material that contains the resin C forming the covering resin layer 3. In this case, the cross-sectional shape of the adhesive layer 2 can be controlled by a method of, for example, modifying the shape of a die used in the extrusion molding.

• Side Reinforcing Layer

In each of the tire side portions 14, a side reinforcing rubber 26, which is one example of a side reinforcing layer that reinforces each tire side portion 14, is arranged at the tire width-direction inner side of the carcass 22. The side reinforcing rubber 26 is a reinforcing rubber for allowing the tire 10 to run over a prescribed distance in a state of supporting the weight of the vehicle and the occupants when the internal pressure of the tire 10 has fallen due to a puncture or the like.

The side reinforcing rubber 26 extends in the tire radial direction from the side of each bead core 18 to the side of each tread portion 16 along an inner surface 221 of the carcass 22. The side reinforcing rubber 26 has a shape whose thickness decreases toward the side of the bead core 18 and toward the side of the tread portion 16, such as a substantially crescent shape. It is noted here that the term "thickness" used herein for the side reinforcing rubber 26 refers to the length measured along a normal line of the carcass 22 in a state where the tire 10 is mounted on the standard rim 30 and the internal pressure is adjusted to be the standard air pressure.

In the side reinforcing rubber 26, an end portion 26A at the side of the tread portion 16 overlaps with the tread portion 16, with the carcass 22 (specifically, the carcass main body 22A) being sandwiched therebetween. Specifically, the end portion 26A of the side reinforcing rubber 26 overlaps with the belt layers 24A. Meanwhile, in the side reinforcing rubber 26, an end portion 26B at the side of the bead core 18 overlaps with the bead filler 20, with the carcass 22 (specifically the carcass main body 22A) being sandwiched therebetween.

It is preferred that the elongation at break of the side reinforcing rubber 26 is set in a range of from 130 to 190%. The term "elongation at break" used herein refers to a value of elongation at break (%) that is measured in accordance with JIS K6251:2010 (using a dumbbell-shaped No. 3 test piece). In the first embodiment, the side reinforcing rubber 26 consists of only a single kind of rubber material; however, the disclosure is not restricted to this configuration, and the side reinforcing rubber 26 may be configured by plural kinds of rubber materials.

Further, in the first embodiment, the side reinforcing rubber 26 containing a rubber as a main component is used as one example of the side reinforcing layer; however, the disclosure is not restricted to this configuration, and the side reinforcing layer may be formed from other material. For example, a side reinforcing layer containing a thermoplastic resin or the like as a main component may be formed. It is noted here that the side reinforcing rubber 26 may also contain other materials, such as a filler, short fibers, and a resin.

A thickness GB of the side reinforcing rubber 26 at a midpoint Q of an overlapping portion 28 where the bead filler 100 overlaps with the side reinforcing rubber 26 via the carcass 22 (i.e., at a midpoint between the end portion 20A of the bead filler 100 and the end portion 26B of the side reinforcing rubber 26 along the extending direction of the carcass 22) is preferably set in a range of from 40 to 80% of a maximum thickness GA of the side reinforcing rubber 26. In this manner, by controlling the thickness GB of the side reinforcing rubber 26 to be from 40 to 80% of the maximum thickness GA, breakage (e.g., cracking) of the side reinforcing rubber 26 can be inhibited even if a buckling phenomenon occurred in the tire side portion 14. In the first embodiment, the thickness of the side reinforcing rubber 26 at the maximum width position of the carcass 22 is the maximum thickness GA; however, the disclosure is not restricted to this configuration. The term "maximum width position" used herein for the carcass 22 refers to a position at which the carcass 22 has the largest width along the tire width direction.

In a state where the tire 10 is mounted on the standard rim 30 and the internal pressure is adjusted to be the standard air pressure, a height LH from the end portion 26B of the side reinforcing rubber 26 to the tip of the bead portion 12 is preferably set in a range of from 50 to 80% of the height BH of the bead filler 20. By controlling the height LH to be not more than 80% of the height BH, sufficient durability in run-flat running is likely to be ensured. Further, by controlling the height LH to be not less than 50% of the height BH, excellent riding comfort is attained.

In the first embodiment, a rim guard (so-called rim protector) is not arranged since the first embodiment pertains to the tire 10 having a large tire cross-sectional height SH; however, the disclosure is not restricted to this configuration, and a rim guard may be arranged as well.

On the inner surface of the tire 10, an inner liner (not illustrated) is arranged in such a manner to extend from one bead portion 12 to the other bead portion 12. In the tire 10 of the first embodiment, as an example, a butyl rubber

is used as a main component of the inner liner; however, the disclosure is not restricted to this configuration, and the main component of the inner liner may be other rubber material or resin.

In the above-described embodiment, as illustrated in FIG. 1, each side reinforcing rubber 26 is configured by a single kind of rubber (or resin); however, the disclosure is not restricted to this configuration, and the side reinforcing rubber 26 may be configured by plural kinds of rubber (or resin). For example, the side reinforcing rubber 26 may have a structure in which plural different kinds of rubber (or resin) are disposed in layers along the tire radial direction, or a structure in which plural different kinds of rubber (or resin) are disposed in layers along the tire width direction.

• Material

The tire 10 illustrated in FIG. 1 is mainly configured by an elastic material. In other words, for example, the regions surrounding the carcass 22 in the respective bead portions 12, the regions at the tire width-direction outer side of the carcass 22 in the respective tire side portions 14, the side reinforcing layers (side reinforcing rubbers 26), and the regions other than the belt layers 24A, the cap layer 24B and the layered layers 24C in the tread portion 16 are configured by an elastic material.

Examples of the elastic material include rubber materials (a tire mainly configured by a rubber material is a so-called rubber tire), and resin materials (a tire mainly configured by a rubber material is a so-called resin tire).

Particularly, the tire 10 illustrated in FIG. 1 is preferably a rubber tire in which the above-described components are configured by a rubber material.

(Elastic Material: Rubber Material)

The rubber material may be any material as long as it contains at least a rubber (i.e., rubber component), and the rubber material may also contain other components such as additives within a range that does not impair the effects of the disclosure. It is noted here, however, that the content of the rubber (i.e., rubber component) in the rubber material is preferably not less than 50% by mass, more preferably not less than 90% by mass, with respect to a total amount of the rubber material.

The rubber component used in the tire of the first embodiment is not particularly restricted, and any natural rubber or synthetic rubber that is conventionally used in a known rubber formulation may be used singly, or two or more kinds thereof may be used as a mixture. For example, any of the below-described rubbers, or a rubber blend of two or more kinds thereof can be used.

The above-described natural rubber may be a sheet rubber or a block rubber, and all of RSS #1 to #5 can be used.

As the above-described synthetic rubber, for example, various diene-based synthetic rubbers, diene-based copolymer rubbers, special rubbers, and modified rubbers can be used. Specific examples thereof include: butadiene-based polymers, such as polybutadienes (BR), copolymers of butadiene and an aromatic vinyl compound (e.g., SBR and NBR), copolymers of butadiene and other diene compound; isoprene-based polymers, such as polyisoprenes (IR), copolymers of isoprene and an aromatic vinyl compound, and copolymers of isoprene and other diene compound; chloroprene rubbers (CR); butyl rubbers (IIR); halogenated butyl rubbers (X-IIR); ethylene-propylene copolymer rubbers (EPM); ethylene-propylene-diene copolymer rubbers (EPDM); and blends of these rubbers.

In the rubber material used in the tire of the first embodiment, other components such as additive may be added to the rubber in accordance with the intended purpose thereof.

Examples of the additives include reinforcing materials such as carbon black, fillers, vulcanization agents, vulcanization accelerators, fatty acids and salts thereof, metal oxides, process oils, and age resistors, and these additives may be incorporated as appropriate.

A tire mainly configured by a rubber material can be obtained by molding an unvulcanized rubber material into the shape of a tire and subsequently vulcanizing the unvulcanized rubber with heating.

• Production of Tire

With regard to a method of producing the tire 10 of the first embodiment, an unvulcanized tire case which includes: a rubber material-containing inner liner (not illustrated); the bead cores 18; the bead fillers 100 (i.e., the first bead fillers 101 and the second bead fillers 102); the carcass 22 prepared by covering a cord with an elastic material (i.e., a rubber material or a resin material); the tire width-direction outer regions of the carcass 22 in the tire side portions 14 formed from an elastic material (i.e., a rubber material or a resin material); and the side reinforcing rubbers 26, is formed on the outer circumference of a known tire molding drum.

As a method of forming the belt layers 24A in the tread portion 16 of this tire case, the belt layers 24 may be formed by, for example, rolling out a member wound on a reel, such as a wire, and winding this wire on the tread portion 16 for a prescribed number of times while rotating the tire case. When the wire is covered with a resin, the covering resin

may be welded onto the tread portion 16 by heating and compression.

Lastly, an unvulcanized tread is pasted onto the outer circumferential surface of the belt layers 24A to obtain a green tire. The green tire produced in this manner is then vulcanized and molded using a vulcanization molding mold, whereby the tire 10 is completed.

The tires of the second to the fourth embodiments will now be described.

In the following descriptions, the same symbols are assigned to the same members as those in the tire 10 of the first embodiment, and redundant descriptions thereof are omitted.

[Second Embodiment]

FIG. 4 is an enlarged tire widthwise cross-sectional view illustrating the vicinity of a bead portion of the tire of the second embodiment.

The tire of the second embodiment has the same configuration as the tire 10 of the first embodiment, except that the arrangement positions of the first and the second bead fillers are modified.

As illustrated in FIG. 4, a bead filler 100A is embedded in a region enclosed by the carcass main body 22A and the folded section 22B. In the second embodiment, a first bead filler 101A is arranged in a region including a region at the tire radial-direction outer side of the bead core 18. The first bead filler 101A has a shape that extends from the region where the bead core 18 is arranged toward the tire radial-direction outer side. In the second embodiment, the first bead filler 101A is formed in such a manner to cover the entire surface of the bead core 18, i.e., arranged in such a manner to extend into a region at the tire radial-direction inner side of the bead core 18.

A second bead filler 102A is arranged in a region including a region at the outer side of the first bead filler 101A. The second bead filler 102A is arranged such that there is an overlap in the tire radial direction between the region where the first bead filler 101A is arranged and the region where the second bead filler 102A is arranged. Further, the second bead filler 102A is in contact with a part of the tire width-direction inner surface of the first bead filler 101A. The second bead filler 102A has a shape that extends from this contact surface of the first bead filler 101A toward the tire radial-direction outer side.

In the second embodiment, the bead filler 100A is configured such that the closer to the tire radial-direction inner side (i.e., bead wire side), the larger is the volume occupied by the first bead filler 101A than the volume occupied by the second bead filler 102A, while the closer to the tire radial-direction outer side (i.e., opposite side to the bead wires), the larger is the volume occupied by the second bead filler 102A than the volume occupied by the first bead filler 101A.

[Third Embodiment]

FIG. 5 is an enlarged tire widthwise cross-sectional view illustrating the vicinity of a bead portion of the tire of the third embodiment.

The tire of the third embodiment has the same configuration as the tire 10 of the first embodiment, except that the arrangement positions of the first and the second bead fillers are modified.

As illustrated in FIG. 5, a bead filler 100B is embedded in a region enclosed by the carcass main body 22A and the folded section 22B. In the third embodiment, a first bead filler 101B is arranged in a region that extends from a height of about a half of the height BH of the bead filler 100B to the tire radial direction inner side, and a second bead filler 102B is arranged in a region that extends from the above-described height to the tire radial-direction outer side.

The first bead filler 101B is arranged in a region including a region at the tire radial-direction outer side of the bead core 18. The first bead filler 101B has a shape that extends from the region where the bead core 18 is arranged toward the tire radial-direction outer side. In the third embodiment, the first bead filler 101B is formed in such a manner to cover the entire surface of the bead core 18, i.e., arranged in such a manner to extend into a region at the tire radial-direction inner side of the bead core 18.

The second bead filler 102B is arranged in a region including a region at the outer side of the first bead filler 101B. In the tire radial direction, there is no overlap between the region where the first bead filler 101B is arranged and the region where the second bead filler 102B is arranged, and the second bead filler 102B is in contact with the tire radial-direction outermost surface of the first bead filler 101B. The second bead filler 102B has a shape that extends from this contact surface of the first bead filler 101B toward the tire radial-direction outer side.

[Fourth Embodiment]

FIG. 6 is an enlarged tire widthwise cross-sectional view illustrating the vicinity of a bead portion of the tire of the fourth embodiment.

The tire of the fourth embodiment has the same configuration as the tire 10 of the first embodiment, except

that the first bead fillers are not arranged in a region at the tire radial-direction inner side of the respective bead cores, and that the bead cores have a different shape.

As illustrated in FIG. 6, the bead portion 12 includes: an annular bead core 18C, in which nine bead wires 1 are covered with covering resin layers 3C via adhesive layers (not illustrated); and a bead filler 100C (i.e., a first bead filler 101C and a second bead filler 102C). In the bead portion 12 of the fourth embodiment, the first bead filler 101C is formed in contact with only a part of the surface (specifically, the tire radial-direction outer surface) of the bead core 18C, and the first bead filler 101C is not arranged in a region at the tire radial-direction inner side of the bead core 18C.

Thus far, the disclosure has been described referring to the first to the fourth embodiments; however, these embodiments are merely examples, and the disclosure can be carried out with various modifications within a range that does not depart from the spirit of the disclosure. It is needless to say that the scope of the rights of the disclosure is not limited to these embodiments.

As described above, according to the disclosure, the following bead member for a tire, tire, and method of producing a bead member for a tire are provided.

<1> According to a first aspect of the disclosure, there is provided a bead member for a tire, comprising:

a bead wire;
a first bead filler that is in contact with the bead wire directly or via another layer and is arranged in a region including at least a region at an outer side of the bead wire in a tire radial direction; and
a second bead filler that is in contact with the first bead filler directly or via another layer and is arranged in a region including at least a region at an outer side of the first bead filler in the tire radial direction,
the first bead filler comprising a resin A,
the second bead filler comprising a resin B, and
the resin A having a melting point higher than that of the resin B.

<2> According to a second aspect of the disclosure, there is provided the bead member for a tire according to the first aspect, wherein the melting point of the resin A is from 164°C to 216°C.

<3> According to a third aspect of the disclosure, there is provided the bead member for a tire according to the first or second aspect, wherein the first bead filler and the second bead filler each have a Charpy impact strength of 5 $kJ/m^2$ or higher.

<4> According to a fourth aspect of the disclosure, there is provided the bead member for a tire according to any one of the first to third aspects, wherein the first bead filler has a tensile elastic modulus higher than that of the second bead filler.

<5> According to a fifth aspect of the disclosure, there is provided the bead member for a tire according to any one of the first to fourth aspects, wherein:

a tensile elastic modulus of the first bead filler is from 260 MPa to 1,400 MPa, and
a tensile elastic modulus of the second bead filler is from 137 MPa to 1,000 MPa.

<6> According to a sixth aspect of the disclosure, there is provided the bead member for a tire according to any one of the first to fifth aspects, wherein the resin A and the resin B are resins that have a common skeleton among structural units configuring main chains of the respective resins.

<7> According to a seventh aspect of the disclosure, there is provided the bead member for a tire according to any one of the first to sixth aspects, wherein at least one of the resin A or the resin B is a thermoplastic elastomer.

<8> According to an eighth aspect of the disclosure, there is provided the bead member for a tire according to the seventh aspect, wherein at least one of the resin A or the resin B is a polyamide-based thermoplastic elastomer or a polyester-based thermoplastic elastomer.

<9> According to a ninth aspect of the disclosure, there is provided the bead member for a tire according to any one of the first to eighth aspects, wherein the bead wire is covered with a covering resin layer comprising a resin C.

<10> According to a tenth aspect of the disclosure, there is provided the bead member for a tire according to the ninth aspect, wherein an adhesive resin layer comprising a resin D is arranged between the bead wire and the covering resin layer.

<11> According to an eleventh aspect of the disclosure, there is provided the bead member for a tire according to the tenth aspect, wherein the resin D is a polar functional group-containing thermoplastic resin or a polar functional group-containing thermoplastic elastomer.

<12> According to a twelfth aspect of the disclosure, there is provided the bead member for a tire according to the tenth or eleventh aspect, wherein the resin D has a melting point of from 139°C to 220°C.

<13> According to a thirteenth aspect of the disclosure, there is provided a tire, comprising the bead member for a

tire according to any one of the first to twelfth aspects in a pair of bead portions.

<14> According to a fourteenth aspect of the disclosure, there is provided a method of producing a bead member for a tire,

the member comprising: a bead wire; a first bead filler that is in contact with the bead wire directly or via another layer and is arranged in a region including at least a region at an outer side of the bead wire in a tire radial direction; and a second bead filler that is at least partially in contact with the first bead filler and is arranged in a region including at least a region at an outer side of the first bead filler in the tire radial direction,

the method comprising: a placement step of placing the bead wire, and the second bead filler comprising a resin B, in a mold; and an injection forming step of injecting a resin composition comprising a resin A into the mold after the placement step to form the first bead filler in contact with at least a part of the second bead filler, and

the resin A having a melting point higher than that of the resin B.

<15> According to a fifteenth aspect of the disclosure, there is provided a method of producing a bead member for a tire,

the member comprising: a bead wire; a first bead filler that is in contact with the bead wire directly or via another layer and is arranged in a region including at least a region at an outer side of the bead wire in a tire radial direction; and a second bead filler that is at least partially in contact with the first bead filler and is arranged in a region including at least a region at an outer side of the first bead filler in the tire radial direction,

the method comprising a welding step of melting a surface of at least one of the first bead filler or the second bead filler and welding the first bead filler and the second bead filler together such that the first bead filler is in contact with at least a part of the second bead filler,

the first bead filler comprising a resin A,

the second bead filler comprising a resin B, and

the resin A having a melting point higher than that of the resin B.

<16> According to a sixteenth aspect of the disclosure, there is provided the method of producing a bead member for a tire according to the fourteenth or fifteenth aspect, wherein a difference in melting point between the resin A and the resin B is 30°C or smaller.

## EXAMPLES

The disclosure will now be described concretely by way of Examples thereof; however, the disclosure is not restricted thereto by any means. It is noted here that, unless otherwise specified, "part(s)" is based on mass.

### [Examples and Comparative Examples]

#### <Preparation of Bead Cores>

A bead core of the mode illustrated in FIG. 3B, which is described above for the first embodiment, was prepared.

First, using monofilaments (specifically monofilaments having an average diameter of φ1.25 mm, made of steel, strength: 2,700 N, elongation: 7%) as bead wires, the adhesive resin (resin D) shown in Table 1, which had been heat-melted, was adhered to the bead wires, whereby a layer serving as an adhesive resin layer was formed on each of the bead wires.

Next, the thus obtained bead wires each having the layer serving as an adhesive resin layer thereon were placed in a mold such that they were arranged in an array of three, and the covering resin (resin C) shown in Table 1, which was extruded from an extruder, was allowed to adhere to and thereby cover the outer circumference of each layer serving as an adhesive resin layer, followed by cooling. As for the extrusion conditions, the temperature of the bead wires was set at 200°C, the temperature of the covering resin (resin C) was set at 240°C, and the extrusion rate was set at 30 m/min. The resulting member having three bead wires in an array, which is illustrated in FIG. 3B, was wound while being welded by hot air, whereby a bead core having a structure in which the outer circumferences of nine bead wires were covered with a covering resin layer via adhesive resin layers was prepared.

In this bead core, the adhesive resin layers had a thickness (specifically, average thickness of the smallest parts) of 50 μm, and the covering resin layer had a thickness (specifically, average thickness of the smallest parts) of 200 μm. Further, the average distance between adjacent bead wires was 200 μm.

#### <Preparation of Bead Members/Adhesion Method Based on Injection Molding>

Using the thus obtained bead core, a bead member (i.e., a member including the bead core and first and second bead fillers) of the mode illustrated in FIGs. 1 and 2, which is described above for the first embodiment, was prepared.

Specifically, first, the second bead filler was prepared by injection-molding the resin B shown in Table 1. Then,

the above-obtained bead core and the second bead filler were placed in a mold that had been previously processed into a bead filler shape, and the resin A shown in Table 1 was injection-molded thereon, whereby a bead member in which the first bead filler (resin A) and the second bead filler (resin B) were integrated was prepared.

It is noted here that the mold temperature was from 80 to 110°C and the molding temperature was from 200 to 270°C.

In the above-described manner, bead members each consisting of only the bead core, the first bead filler and the second bead filler were prepared.

<Production of Tire Including Bead Members as Bead Portions>

A tire (specifically, a run-flat tire) of the mode illustrated in FIGs. 1 and 2, which is described above for the first embodiment, was produced using the thus obtained bead members as a pair of bead portions.

The bead members obtained above and a carcass including a polyethylene terephthalate-made ply cord were prepared, and a green tire was produced using them along with tire side portions formed from a mixed rubber material of a natural rubber (NR) and a styrene-butadiene rubber (SBR) (i.e., regions at the tire width-direction outer side of the carcass), side reinforcing rubbers, a tread portion, and belt layers made of twisted wires.

For the thus obtained green tire, rubber vulcanization was performed by heating the green tire at 150°C for 25 minutes in Comparative Examples 1 to 3 and Examples 1 to 3, or at 170°C for 20 minutes in Comparative Example 4 and Examples 4 to 5.

The resulting tire had a size of 225/40R18 and a tread portion thickness of 10 mm.

[Measurement of Physical Properties]

The melting points of the first bead filler (resin A), the second bead filler (resin B), the covering resin layer (resin C) and the adhesive resin layer (resin D) each indicate a temperature at which an endothermic peak was observed in a curve (DSC curve) obtained by differential scanning calorimetry (DSC). The melting points were measured in accordance with JIS K7121:2012 using a differential scanning calorimeter (DSC). For the measurement, "DSC Q100" manufactured by TA Instruments Inc. was used at a sweeping rate of 10°C/min.

The water absorption rate of the first bead filler and that of the second bead filler were measured in accordance with ISO62 (1999).

The tensile elastic moduli of the first bead filler, the second bead filler and the covering resin layer were measured in accordance with JIS K7113:1995. In more detail, the tensile elastic moduli were measured using SHIMADZU AUTOGRAPH AGS-J (5 kN) manufactured by Shimadzu Corporation at a tensile rate of 100 mm/min.

Measurement samples were separately prepared using the same materials as the first bead filler, the second bead filler and the covering resin layer. Specifically, a measurement sample was prepared by molding each material into a JIS #3 shape using an injection molding machine (NEX-50, manufactured by Nissei Plastic Industrial Co., Ltd.) at a cylinder temperature of from 180°C to 260°C and a mold temperature of from 50°C to 110°C. Alternatively, a measurement sample was prepared by molding each material into a 110 mm × 110 mm flat plate of 2 mm in thickness (t) and subsequently punching out the thus obtained flat plate into a JIS #3 shape using SUPER DUMBBELL (registered trademark) manufactured by Dumbbell Co., Ltd.

The Charpy impact strength of the first bead filler and that of the second bead filler were measured in accordance with the method prescribed in JIS K7111-1:2012 using a Charpy impact tester (trade name: Model 141, manufactured by Yasuda Seiki Seisakusho, Ltd.) at a test piece (notched) temperature of 23°C.

In more detail, at a nominal pendulum energy (estimation) of 4 J and a hammer lift angle of 150°, the restored angle of the hammer after colliding with a sample was measured, and the amount of consumed energy (i.e., the amount of absorbed energy) was calculated from the difference in the angle before and after the collision.

Measurement samples were each molded into the A1 shape prescribed in JIS K7139:2009 under the above-described molding conditions.

[Run-Flat Runnability]

An indoor drum test based on the ISO standard, in which a tire is subjected to run-flat running with an internal pressure of 0 kPa and a speed of 80 km/h, is conducted by simulation. In other words, the distance up to a point when the tire can no longer run due to its failure or support failure is calculated as an estimated value. This estimated value is evaluated based on the following criteria.

-Criteria-

A: The tire can run a distance of 100 km or longer.
B: The tire can run a distance of 80 km or longer but shorter than 100 km.
C: The tire can no longer run in a distance of shorter than 80 km.

[Rim Fittability]

A pneumatic tire having a size of 225/40R18 and a standard rim of 7.5J×18 corresponding to the tire size are prepared. A test in which a single worker is made to perform an operation of mounting the tire onto the rim three times to judge the presence or absence of "cracking (i.e., cracking in a bead member)" during the operation is conducted by simulation, and the result thereof is predicted.

[Tensile Permanent Set (So-Called Creeping) of First Bead Filler]

The ease of setting of the bead wires was evaluated by a creep test. Using the same material as the first bead filler, a test piece was separately prepared by injection molding, and a #3 dumbbell piece was punched out from the thus obtained test piece to prepare a sample.

For the thus obtained JIS #3 dumbbell test piece, the amount of creeping (i.e., elongation rate) after 72 hours was measured in accordance with JIS K7115:1999 at a chuck distance of 50 mm under the conditions of 40 N and 90°C.

It is noted here that evaluations of "A" and "B" were given when the tensile permanent set was 4% or less and more than 4%, respectively.

[Table 1]

| | | | Comparative Example 1 | Comparative Example 2 | Comparative Example 3 | Example 1 | Example 2 | Example 3 | Example 4 | Example 5 | Comparative Example 4 |
|---|---|---|---|---|---|---|---|---|---|---|---|
| Adhesive resin layer | Adhesive resin (Resin D) | Type | PA66 | PA66 | QE060 | QE060 | QE060 | QE060 | GQ730 | GQ730 | GQ730 |
| | | Melting point (°C) | 265 | 265 | 139 | 139 | 139 | 139 | 200 | 200 | 200 |
| Covering resin layer | Covering resin (Resin C) | Type | PA6 | PA6 | PA12 | XPA9055 | PA12 | PA6 | HYTREL 2571 | HYTREL 7247 | HYTREL 7247 |
| | | Melting point (°C) | 225 | 225 | 178 | 164 | 178 | 225 | 225 | 216 | 216 |
| | Tensile elastic modulus (MPa) | | 2,200 | 2,200 | 1,400 | 260 | 1,400 | 2,200 | 863 | 422 | 422 |
| First bead filler | Resin (Resin A) | Type | PA6 | PA66 | XPA9048 | XPA9055 | XPA9068 | PA12 | HYTREL 7247 | HYTREL 6347 | HYTREL 5557 |
| | | Melting point (°C) | 225 | 265 | 155 | 164 | 175 | 178 | 216 | 215 | 208 |
| | Water absorption rate (% by mass) | | 9 | 8 | 3 | 2.8 | 1.6 | 1 | 0.3 | 0.4 | 0.4 |
| | Tensile elastic modulus (MPa) | | 2,200 | 3,000 | 160 | 260 | 1,000 | 1,400 | 422 | 274 | 137 |
| | Charpy impact strength with notch at 23°C ($kJ/m^2$) | | 4 | 4 | >10 | >10 | 8 | 5 | 8 | >10 | >10 |

(continued)

| | | | Comparative Example 1 | Comparative Example 2 | Comparative Example 3 | Example 1 | Example 2 | Example 3 | Example 4 | Example 5 | Comparative Example 4 |
|---|---|---|---|---|---|---|---|---|---|---|---|
| Second bead filler | Resin (Resin B) | Type | PA6 | PA66 | XPA9048 | XPA9048 | XPA9055 | XPA9068 | HYTREL 6347 | HYTREL 5557 | HYTREL 5557 |
| | | Melting point (°C) | 225 | 265 | 155 | 155 | 164 | 175 | 215 | 208 | 208 |
| | Water absorption rate (%) | | 9 | 8 | 3 | 3 | 2.8 | 1.6 | 0.4 | 0.4 | 0.4 |
| | Tensile elastic modulus (MPa) | | 2,200 | 3,000 | 160 | 160 | 260 | 1,000 | 274 | 137 | 137 |
| | Charpy impact strength with notch at 23°C (kJ/$m^2$) | | 4 | 4 | >10 | >10 | >10 | 8 | >10 | >10 | >10 |
| Evaluation | Run-flat runnability | | C | C | C | B | A | A | A | B | C |
| | Rim fittability | | cracking occurs | cracking occurs | favorable | favorable | favorable | favorable | favorable | favorable | favorable |
| | First bead filler: tensile permanent set (%) | | less than 1 A | less than 1 A | 5 B | 3 A | 2 A | 1 A | 1 A | 2.8 A | 5.1 B |

The components shown in the above Tables are as follows.

(Adhesive Resin Layer)

- PA66: manufactured by Toray Industries, Inc., nylon 66, trade name "AMILAN CM1017", melting point = 265°C
- QE060: manufactured by Mitsui Chemicals, Inc., maleic anhydride-modified propylene, "ADMER QE060", melting point = 139°C
- GQ730: manufactured by Mitsubishi Chemical Corporation, maleic anhydride-modified polyester-based thermoplastic elastomer, "PRIMALLOY-AP GQ730", melting point = 200°C

(Covering Resin Layer, First Bead Filler, and Second Bead Filler)

- PA6: manufactured by UBE Industries, Ltd., nylon 6, trade name "UBE NYLON 1013B", melting point = 225°C
- PA12: manufactured by UBE Industries, Ltd., nylon 12, trade name "UBESTA 3024U", melting point = 178°C
- PA66: the same as above
- XPA9048: manufactured by UBE Industries, Ltd., trade name "UBESTA XPA9048", melting point = 155°C
- XPA9055: manufactured by UBE Industries, Ltd., trade name "UBESTA XPA9055", melting point = 164°C
- XPA9068: manufactured by UBE Industries, Ltd., trade name "UBESTA XPA9068", melting point = 175°C
- HYTREL 2571: manufactured by DuPont-Toray Co., Ltd., polyester-based thermoplastic elastomer, "HYTREL 2571", melting point = 225°C
- HYTREL 5557: manufactured by DuPont-Toray Co., Ltd., polyester-based thermoplastic elastomer, "HYTREL 5557", melting point = 208°C
- HYTREL 6347: manufactured by DuPont-Toray Co., Ltd., polyester-based thermoplastic elastomer, "HYTREL 6347", melting point = 215°C
- HYTREL 7247: manufactured by DuPont-Toray Co., Ltd., polyester-based thermoplastic elastomer, "HYTREL 7247", melting point = 216°C

As seen from the evaluation results shown in Table 1, the tires of Examples, which had the first bead fillers each arranged in a region including a region at the outer side of the bead wires in the tire radial direction and the second bead fillers each arranged in a region including a region at the outer side of the respective first bead fillers and in which the melting point of the resin A contained in the first bead fillers was adjusted to be higher than that of the resin B contained in the second bead fillers, exhibited superior air sealing performance as compared to the tires of Comparative Examples. Further, in the Examples, the tires exhibited superior run-flat runnability (i.e., running durability), and breakage during mounting of each tire on a rim was inhibited as well.

The disclosure of Japanese Patent Application No. 2017-196362 is incorporated herein by reference in its entirety.

All documents, patent applications, and technical standards described in this specification are incorporated herein by reference to the same extent as if each individual document, patent application, or technical standard was specifically and individually indicated to be incorporated by reference.

DESCRIPTION OF SYMBOLS

1: bead wire
2: adhesive layer
3, 3C: covering resin layer
10: tire (run-flat tire)
12: bead portion
14: tire side portion
16: tread portion
18, 18C: bead core
20A: end portion
22: carcass
22A: main body
22B: folded section
22C: end portion
22I: inner surface

22O: outer surface
24A: belt layer
24B: cap layer
24C: layered layer
26: side reinforcing rubber
26A: end portion (end portion at the tread portion side)
26B: end portion (end portion at the bead core side)
30: standard rim
100, 100A, 100B, 100C: bead filler
101, 101A, 101B, 101C: first bead filler
102, 102A, 102B, 102C: second bead filler
CL: tire equatorial plane
Q: midpoint

## Claims

**1.** A bead member for a tire, comprising:

a bead wire;
a first bead filler that is in contact with the bead wire directly or via another layer and is arranged in a region including at least a region at an outer side of the bead wire in a tire radial direction; and
a second bead filler that is in contact with the first bead filler directly or via another layer and is arranged in a region including at least a region at an outer side of the first bead filler in the tire radial direction,
the first bead filler comprising a resin A,
the second bead filler comprising a resin B, and
the resin A having a melting point higher than that of the resin B.

**2.** The bead member for a tire according to claim 1, wherein the melting point of the resin A is from 164°C to 216°C.

**3.** The bead member for a tire according to claim 1 or 2, wherein the first bead filler and the second bead filler each have a Charpy impact strength of 5 $kJ/m^2$ or higher.

**4.** The bead member for a tire according to any one of claims 1 to 3, wherein the first bead filler has a tensile elastic modulus higher than that of the second bead filler.

**5.** The bead member for a tire according to any one of claims 1 to 4, wherein:

a tensile elastic modulus of the first bead filler is from 260 MPa to 1,400 MPa, and
a tensile elastic modulus of the second bead filler is from 137 MPa to 1,000 MPa.

**6.** The bead member for a tire according to any one of claims 1 to 5, wherein the resin A and the resin B are resins that have a common skeleton among structural units configuring main chains of the respective resins.

**7.** The bead member for a tire according to any one of claims 1 to 6, wherein at least one of the resin A or the resin B is a thermoplastic elastomer.

**8.** The bead member for a tire according to claim 7, wherein at least one of the resin A or the resin B is a polyamide-based thermoplastic elastomer or a polyester-based thermoplastic elastomer.

**9.** The bead member for a tire according to any one of claims 1 to 8, wherein the bead wire is covered with a covering resin layer comprising a resin C.

**10.** The bead member for a tire according to claim 9, wherein an adhesive resin layer comprising a resin D is arranged between the bead wire and the covering resin layer.

**11.** The bead member for a tire according to claim 10, wherein the resin D is a polar functional group-containing thermoplastic resin or a polar functional group-containing thermoplastic elastomer.

**12.** The bead member for a tire according to claim 10 or 11, wherein the resin D has a melting point of from 139°C to 220°C.

**13.** A tire, comprising the bead member for a tire according to any one of claims 1 to 12 in a pair of bead portions.

**14.** A method of producing a bead member for a tire,
the member comprising: a bead wire; a first bead filler that is in contact with the bead wire directly or via another layer and is arranged in a region including at least a region at an outer side of the bead wire in a tire radial direction; and a second bead filler that is at least partially in contact with the first bead filler and is arranged in a region including at least a region at an outer side of the first bead filler in the tire radial direction,
the method comprising: a placement step of placing the bead wire, and the second bead filler comprising a resin B, in a mold; and an injection forming step of injecting a resin composition comprising a resin A into the mold after the placement step to form the first bead filler in contact with at least a part of the second bead filler, and
the resin A having a melting point higher than that of the resin B.

**15.** A method of producing a bead member for a tire,
the member comprising: a bead wire; a first bead filler that is in contact with the bead wire directly or via another layer and is arranged in a region including at least a region at an outer side of the bead wire in a tire radial direction; and a second bead filler that is at least partially in contact with the first bead filler and is arranged in a region including at least a region at an outer side of the first bead filler in the tire radial direction,
the method comprising a welding step of melting a surface of at least one of the first bead filler or the second bead filler and welding the first bead filler and the second bead filler together such that the first bead filler is in contact with at least a part of the second bead filler,
the first bead filler comprising a resin A,
the second bead filler comprising a resin B, and
the resin A having a melting point higher than that of the resin B.

**16.** The method of producing a bead member for a tire according to claim 14 or 15, wherein a difference in melting point between the resin A and the resin B is 30°C or smaller.

FIG.1

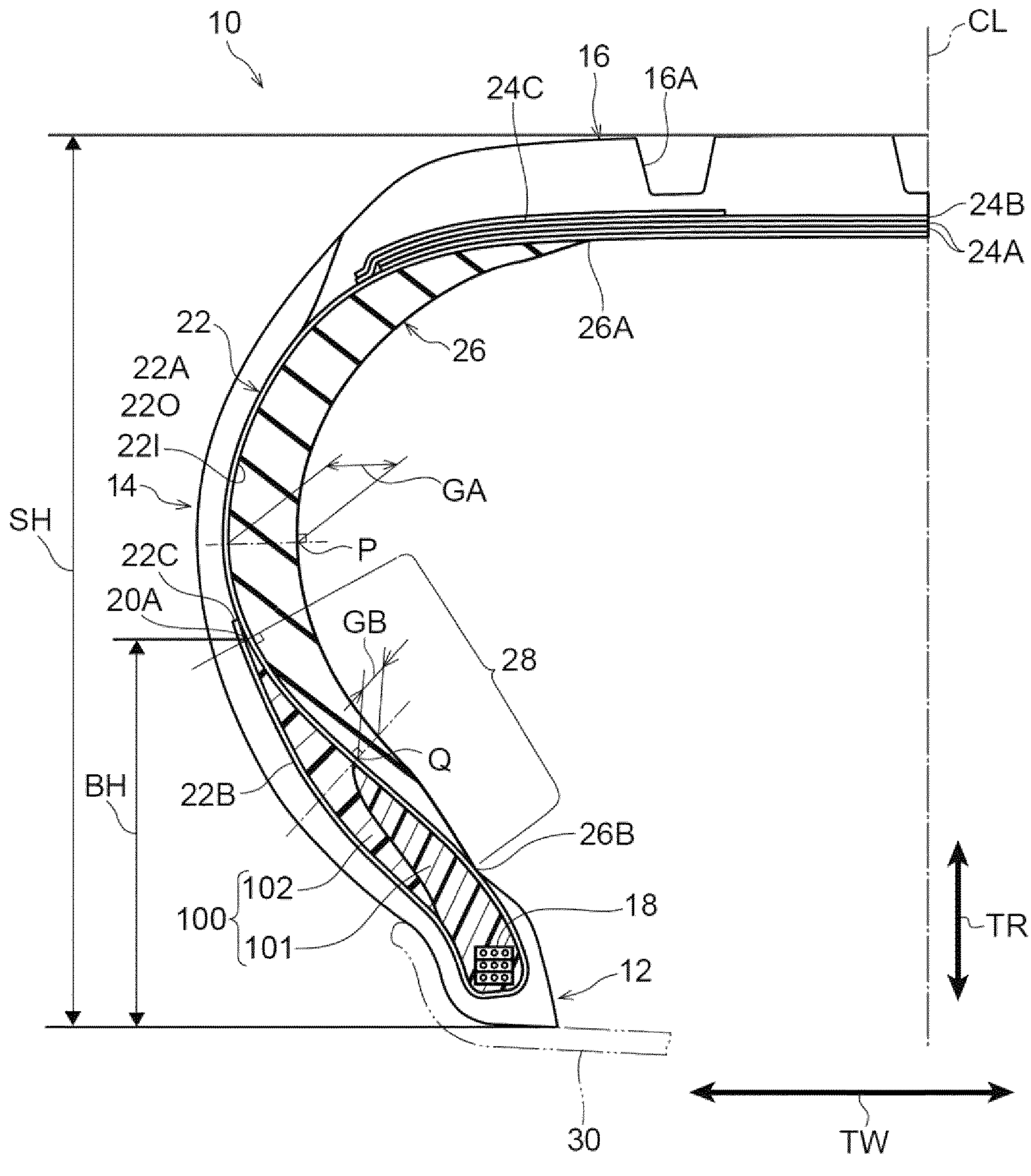
10
CL
16
16A
24C
24B
24A
22
26A
26
22A
22O
22I
GA
14
SH
P
22C
20A
GB
28
Q
BH
22B
26B
102
18
100
101
TR
12
30
TW

FIG.2

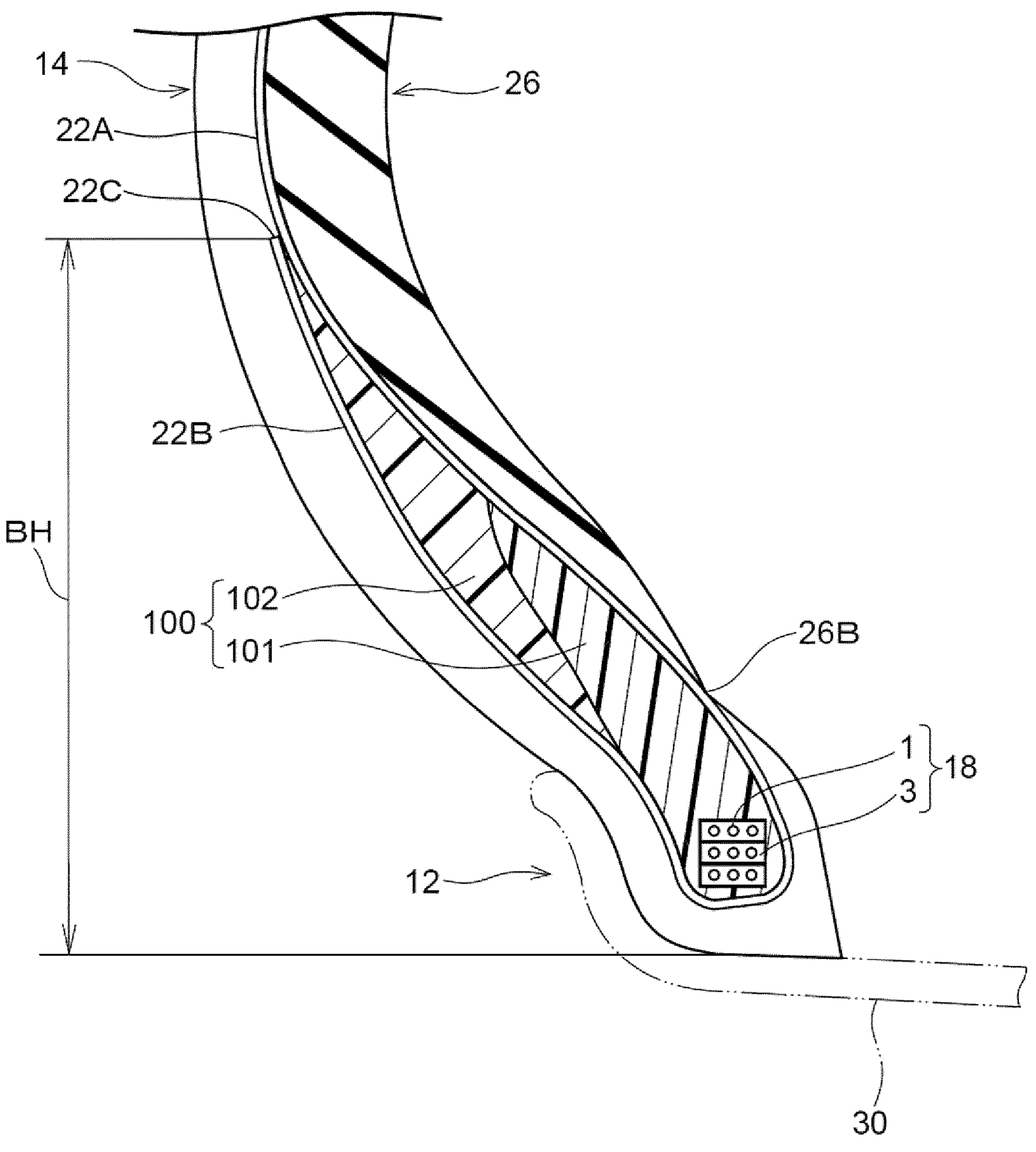

FIG.3A

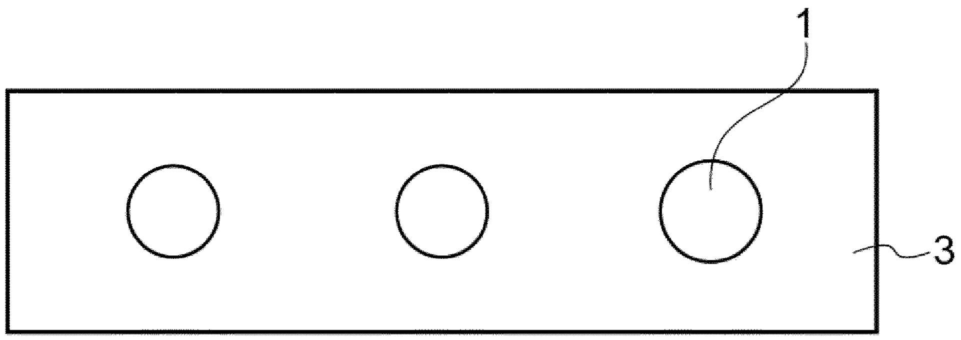


FIG.3B

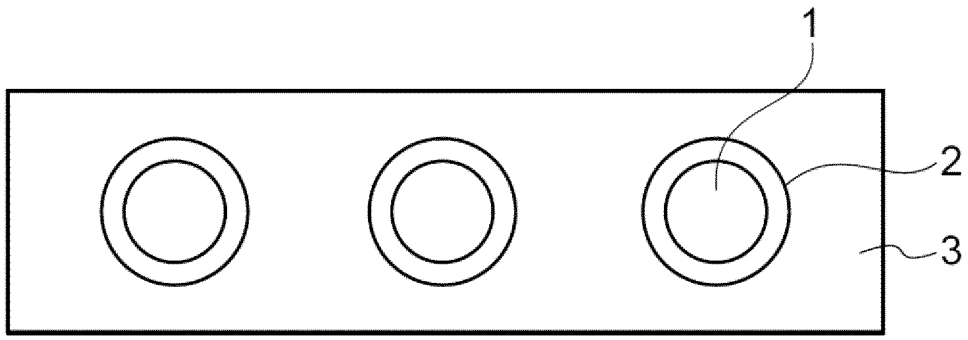


FIG.3C

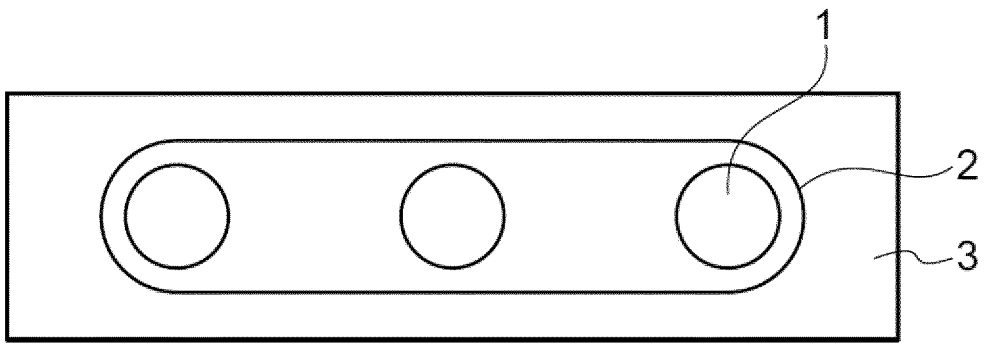

FIG.4

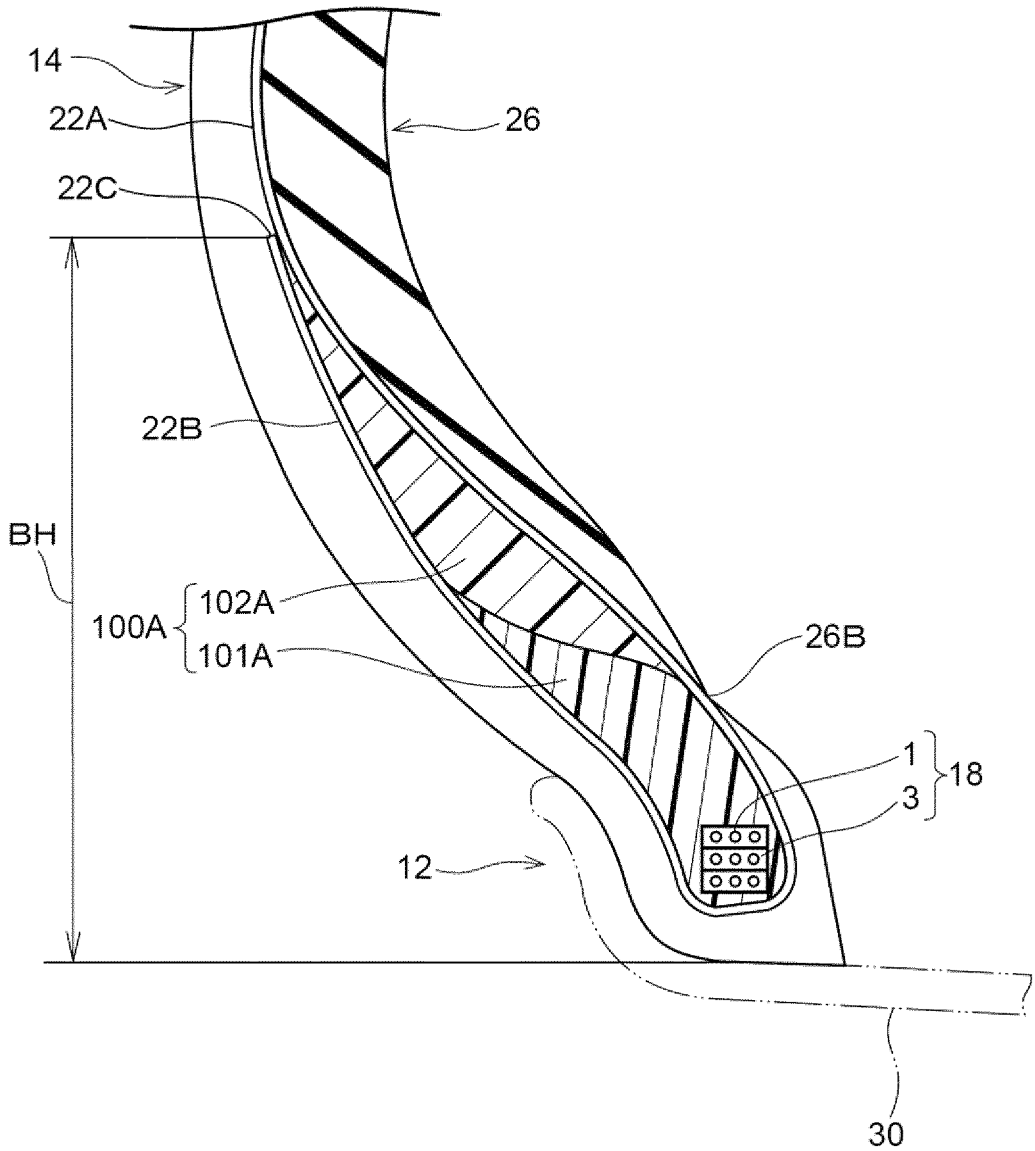

FIG.5

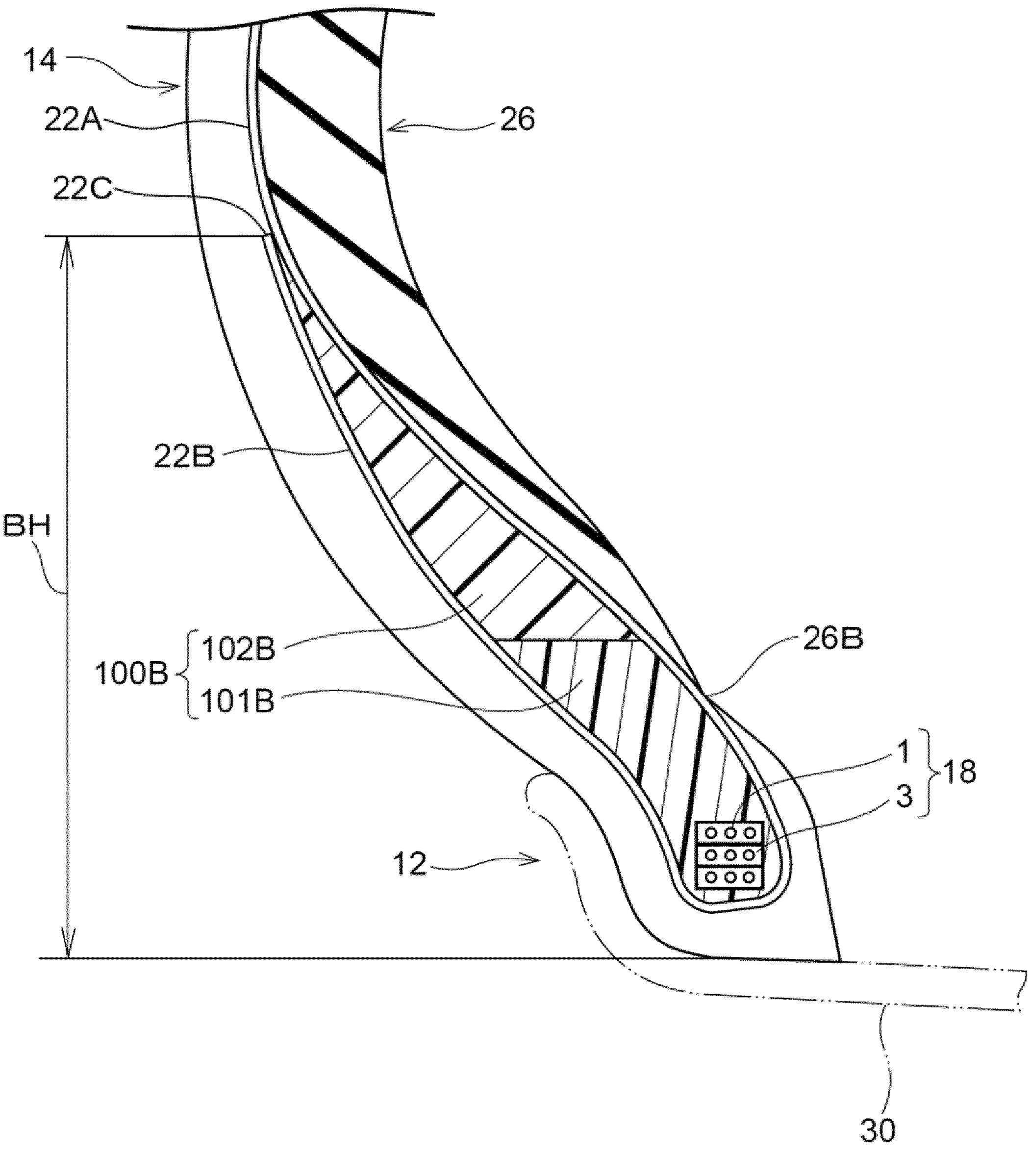

FIG.6

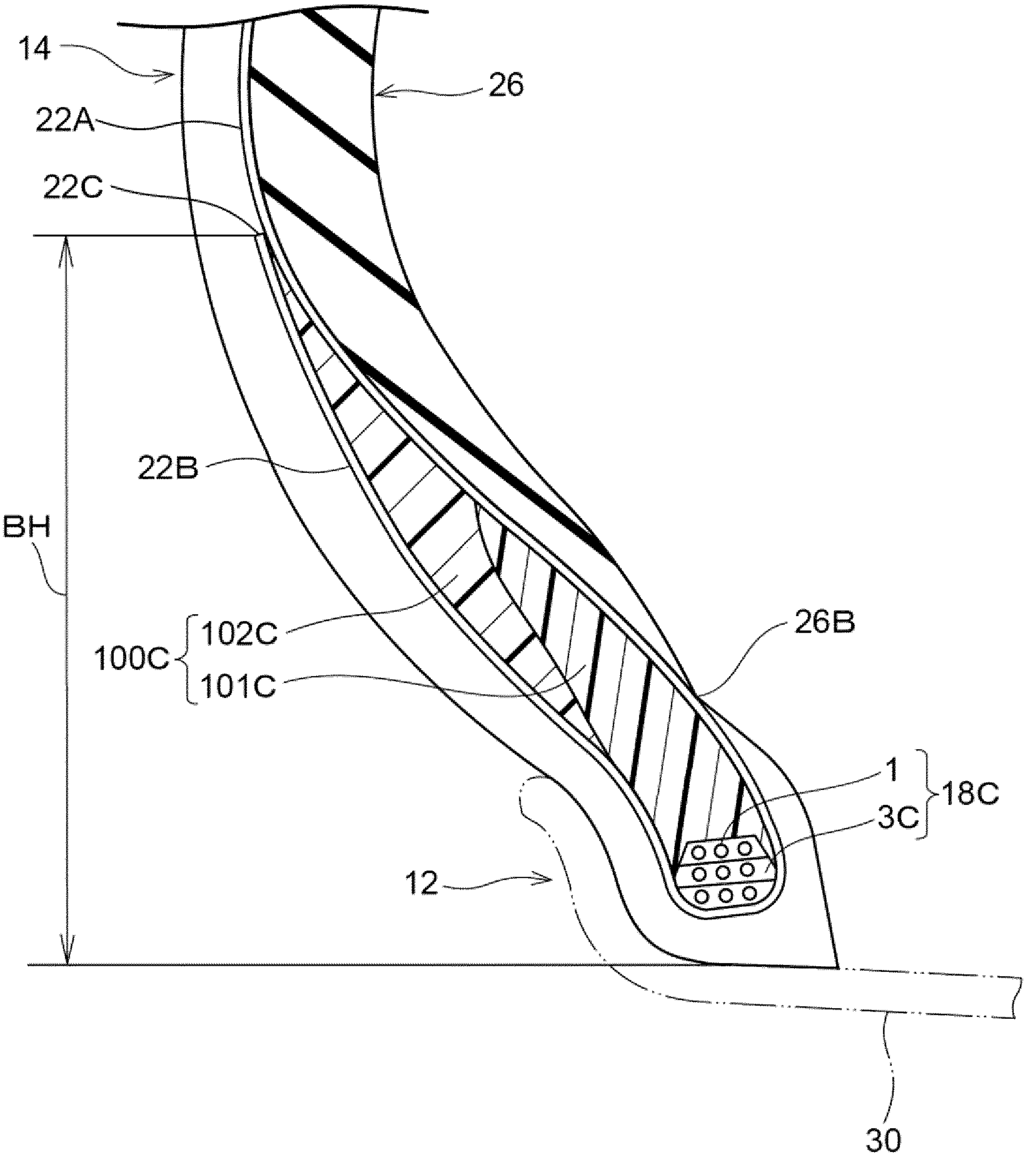

**INTERNATIONAL SEARCH REPORT**

International application No.
PCT/JP2018/037613

A. CLASSIFICATION OF SUBJECT MATTER
Int.Cl. B60C15/06(2006.01)i, B60C15/04(2006.01)i

According to International Patent Classification (IPC) or to both national classification and IPC

B. FIELDS SEARCHED

Minimum documentation searched (classification system followed by classification symbols)
Int.Cl. B60C15/06, B60C15/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 9-300924 A (THE YOKOHAMA RUBBER CO., LTD.) 25 November 1997, entire text (Family: none) | 1-16 |
| A | JP 2010-162826 A (THE YOKOHAMA RUBBER CO., LTD.) 29 July 2010, entire text (Family: none) | 1-16 |
| A | JP 2015-123905 A (THE YOKOHAMA RUBBER CO., LTD.) 06 July 2015, entire text (Family: none) | 1-16 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 December 2018 (28.12.2018) | 15 January 2019 (15.01.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2018/037613

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-150971 A (THE YOKOHAMA RUBBER CO., LTD.) 22 August 2016, entire text (Family: none) | 1-16 |
| A | JP 2007-91151 A (THE YOKOHAMA RUBBER CO., LTD.) 12 April 2007, entire text (Family: none) | 1-16 |
| A | JP 2017-159487 A (SUMITOMO RUBBER INDUSTRIES, LTD.) 14 September 2017, entire text (Family: none) | 1-16 |
| A | JP 2009-155526 A (THE YOKOHAMA RUBBER CO., LTD.) 16 July 2009, entire text (Family: none) | 1-16 |
| A | JP 2005-178764 A (THE GOODYEAR TIRE & RUBBER COMPANY) 07 July 2005, entire text & US 2005/0133135 A1, whole document & EP 1669219 A1 & BR 405444 A | 1-16 |
| A | JP 2010-242021 A (TOYO TIRE AND RUBBER CO., LTD.) 28 October 2010, entire text (Family: none) | 1-16 |
| A | JP 2016-97945 A (BRIDGESTONE CORPORATION) 30 May 2016, entire text & US 2017/0305197 A1, whole document & WO 2016/084536 A1 & EP 3225425 A1 & CN 107000480 A | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H5131815 A
- JP S6325110 A
- JP 2004346273 A
- JP H05331256 A
- JP 2017196362 A


### Non-patent literature cited in the description


- YEAR BOOK. The Japan Automobile Tyre Manufacturers Association, 2017
- YEAR BOOK. JATMA, 2017
- Year Book of The Tire. Rim Association, Inc
- Standard Manual of The European Tyre and Rim Technical Organisation
- JATMA Year Book. The Japan Automobile Tyre Manufacturers Association, Inc